# EUROPEAN PATENT APPLICATION

(11) **EP 4 261 249 A1**
(43) Date of publication of application: **18.10.2023**
(21) Application number: 21906361.7
(22) Date of filing: 02.12.2021
(51) Int. Cl.: C08K 5/5415, C08L 83/06, C09K 3/18

(54) **MIXED COMPOSITION**

(30) Priority: 14.12.2020 JP 2020207132
(71) Applicant: SUMITOMO CHEMICAL COMPANY, LIMITED, Tokyo 103-6020 (JP)
(72) Inventor: SHIMAZAKI, Yasuharu, Osaka-shi, Osaka 554-8558 (JP); DAIMON UEHARA, Michiru, Osaka-shi, Osaka 554-8558 (JP)
(74) Representative: Vossius & Partner Patentanwälte Rechtsanwälte mbB
(86) International application number: PCT/JP2021/044229
(87) International publication number: WO 2022/130998

(57) **Abstract**

To provide a mixed composition which is capable of forming a film excellent in liquid-repellent property (water-repellent property in particular) and furthermore which is excellent in storage stability and is capable of forming a film excellent in liquid-repellent property (water-repellent property in particular) even if stored for a long period of time and then formed into a film. To further provide a film obtained by curing the mixed composition, and glass having the film. A mixed composition of a compound (A1) represented by formula (al), an organosilicon compound (B) represented by formula (b1), and a solvent (E), wherein the solvent (E) comprises a compound (E1) satisfying a Hansen solubility parameter of 18 (J/cm³)^{1/2} or more and 23.5 (J/cm³)^{1/2} or less and a hydrogen bonding term (δH) of the Hansen solubility parameter, of 5.5 (J/cm³)^{1/2} or more.

## Description

### Technical Field

The present invention relates to a mixed composition capable of forming a film having a liquid-repellent property on various base materials, a film obtained by curing the mixed composition, and glass having the film.

### Background Art

Various vehicles, houses, building equipment and the like may have a problem such as deterioration of visibility and a poor appearance due to contamination of a surface of a windowpane. Thus, a surface of a base material such as glass is required to have a good liquid-repellent property. In particular, not only prevention of deposition of liquid droplets on a surface of a base material but also easy removal of deposited liquid droplets is required. As a film capable of improving a liquid-repellent property when formed on a surface of a base material, Patent Literature 1 discloses a transparent film comprising a polysiloxane backbone, and a trialkylsilyl group-containing molecular chain bonded to some of silicon atoms forming the polysiloxane backbone.

### Citation List

### Patent Literature

Patent Literature 1: International Publication No. WO 2016/068138

### Summary of Invention

### Technical Problem

An object of the present invention is to provide a mixed composition which is capable of forming a film excellent in liquid-repellent property (water-repellent property in particular) and furthermore which is excellent in storage stability and is capable of forming a film excellent in liquid-repellent property (water-repellent property in particular) even if stored for a long period of time and then formed into a film. Another object of the present invention is to provide a film obtained by curing the mixed composition, and glass having the film.

### Solution to Problem

The present invention is as follows.
[1] A mixed composition of a compound (A1) represented by the following formula (a1), an organosilicon compound (B) represented by the following formula (b1), and a solvent (E), wherein the solvent (E) comprises a compound (E1) satisfying a Hansen solubility parameter of 18 (J/cm³)^{1/2} or more and 23.5 (J/cm³)^{1/2} or less and a hydrogen bonding term (δH) of the Hansen solubility parameter, of 5.5 (J/cm³)^{1/2} or more. 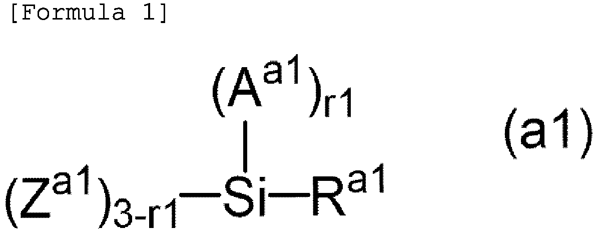
   wherein A^{a1} represents a hydroxy group or a hydrolyzable group, a plurality of A^{a1}s, when present, are optionally different from each other, Z^{a1} represents a hydrocarbon group, a trialkylsilyl group-containing molecular chain or a siloxane backbone-containing group, a plurality of Z^{a1}s, when present, are optionally different from each other, and r1 represents an integer of 1 to 3; and
   R^{a1} represents a group represented by the following formula (a11): 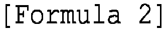 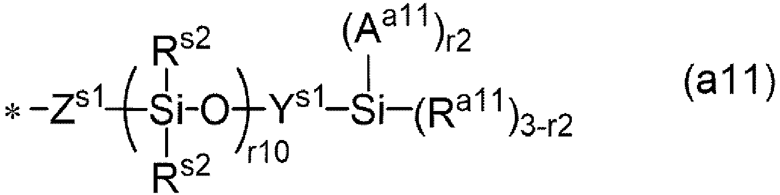
   wherein R^{s2}s each independently represent an alkyl group having 1 to 4 carbon atoms;
   R^{a11} represents a hydrocarbon group or a trialkylsilyloxy group, hydrogen atoms in the hydrocarbon group or the trialkylsilyloxy group are optionally replaced by fluorine atoms, and a plurality of R^{a11}s, when present, are optionally different from each other;
   A^{a11} represents a hydroxy group or a hydrolyzable group, and a plurality of A^{a11}s, when present, are optionally different from each other;
   Z^{s1} represents -O- or a divalent hydrocarbon group, and -CH₂- in the divalent hydrocarbon group is optionally replaced by -O-;
   Y^{s1} represents a singly bond or -Si(R^{s2})₂-L^{s1}-, L^{s1} represents a divalent hydrocarbon group, and -CH₂- in the divalent hydrocarbon group is optionally replaced by -O-;
   r2 represents an integer of 0 to 3;
   r10 represents an integer of 1 or more; and
   * represents a bond,

      Si(R^{b1})_{b20}(X^{b1})_{4-b20} (b1)
   wherein R^{b1} represents a hydrocarbon group having 1 to 5 carbon atoms, X^{b1} represents a hydrolyzable group, and b20 is 0 or 1, and
[2] The mixed composition according to [1], wherein the molar ratio [organosilicon compound (B)/compound (A1)] of the organosilicon compound (B) to the compound (A1) is less than 10.
[3] The mixed composition according to [1] or [2], wherein an organosilicon compound (C) represented by the following formula (c1) is mixed:

   R^{c1}-Si(X^{c1})₃ (c1)

   wherein R^{c1} represents a hydrocarbon group having 6 to 30 carbon atoms, and X^{c1} represents a hydrolyzable group.
[4] The mixed composition according to [3], wherein the mass ratio [compound (A1)/(organosilicon compound (B) + organosilicon compound (C))] of the compound (A1) to the total amount of the organosilicon compound (B) and the organosilicon compound (C) is 0.060 or more.
[5] The mixed composition according to [3] or [4], wherein the mass ratio [compound (A1)/organosilicon compound (C)] of the compound (A1) to the organosilicon compound (C) is 0.2 or more and 30 or less.
[6] The mixed composition according to any one of [1] to [5], wherein the compound (E1) satisfies a ratio (δP/δH) of the polar term (δP) to the hydrogen bonding term (δH) of the Hansen solubility parameter, of 0.70 or more and 1.70 or less.
[7] The mixed composition according to any one of [1] to [6], wherein the solvent (E) comprises 5 mass% or more and 100 mass% or less of the compound (E1).
[8] The mixed composition according to any one of [1] to [7], wherein the solvent (E) satisfies a ratio (δP/δH) of the polar term (δP) to the hydrogen bonding term (δH) of the Hansen solubility parameter, of 0.57 or more and 1.55 or less.
[9] The mixed composition according to any one of [1] to [8], wherein the compound (A1) is a compound represented by the following formula (a1-1): 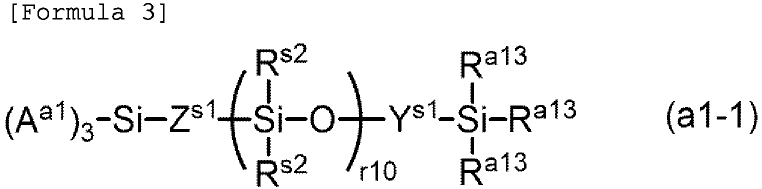 wherein A^{a1}, Z^{s1}, R^{s2}, Y^{s1}, and r10 have the same meanings as described above, R^{a13}s each independently represent a hydrocarbon group or a trialkylsilyloxy group, and hydrogen atoms in the hydrocarbon group or the trialkylsilyloxy group are optionally replaced by fluorine atoms.
[10] The mixed composition according to [9], wherein R^{a13}s each independently represent an alkyl group having 1 to 4 carbon atoms.
[11] The mixed composition according to any one of [1] to [10], wherein water (D) is mixed, and when the total amount of the mixed composition is 100 mass%, the amount of the water (D) is less than 20 mass%.
[12] The mixed composition according to any one of [1] to [11], wherein a weak acid (G) having a pKa of 1 or more and 5 or less is mixed.
[13] A film obtained by curing the mixed composition according to any one of [1] to [12].
[14] Glass having the film according to [13] on at least one surface thereof.

Where a range of the amount, the molar ratio or the mass ratio of each component is described herein, the range can be adjusted during preparation of the mixed composition.

### Advantageous Effect of Invention

By using the mixed composition of the present invention, a film excellent in liquid-repellent property (water-repellent property in particular) can be provided. The mixed composition of the present invention is excellent in storage stability, and thus a film excellent in liquid-repellent property (water-repellent property in particular) can be provided even by using the mixed composition stored for a long period of time.

### Description of Embodiments

The mixed composition of the present invention is a mixed composition of a compound (A1) represented by formula (a1), an organosilicon compound (B) represented by formula (b1), and a solvent (E). The solvent (E) comprises a compound (E1) satisfying a Hansen solubility parameter of 18 (J/cm³)^{1/2} or more and 23.5 (J/cm³)^{1/2} or less and a hydrogen bonding term (δH) of the Hansen solubility parameter, of 5.5 (J/cm³)^{1/2} or more. By using the mixed composition, the liquid-repellent property (water-repellent property in particular), in particular, the slip drop property of the liquid droplet in the film (slip drop property of water droplet in particular) is significantly enhanced, so that deposition of a very small liquid droplet can be suppressed. The mixed composition is excellent in storage stability, and thus, even when the mixed composition stored for a long period of time is used, a film excellent in liquid-repellent property (water-repellent property in particular), in particular, slip drop property of the liquid droplet (slip drop property of water droplet in particular) can be provided.

Hereinafter, the components will be described.

### [Compound (A1)]

In the mixed composition of the present invention, the compound (A1) represented by the following formula (a1) is mixed.

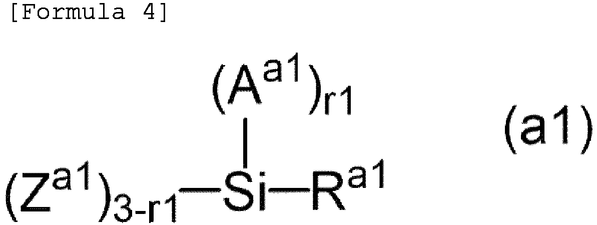

In formula (a1), A^{a1} represents a hydroxy group or a hydrolyzable group, a plurality of A^{a1}s, when present, are optionally different from each other, Z^{a1} represents a hydrocarbon group, a trialkylsilyl group-containing molecular chain, or a siloxane backbone-containing group, a plurality of Z^{a1}s, when present, are optionally different from each other, r1 represents an integer of 1 to 3, and R^{a1} represents a group represented by the following formula (a11).

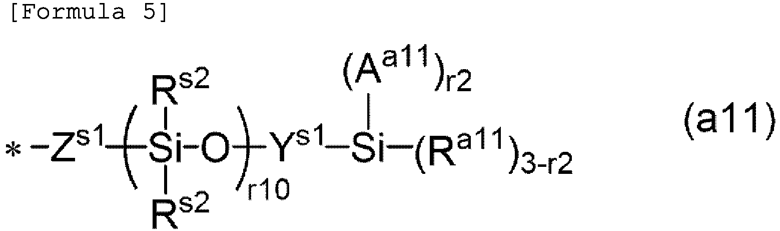

In formula (a11), R^{s2}s each independently represent an alkyl group having 1 to 4 carbon atoms, R^{a11} represents a hydrocarbon group or a trialkylsilyloxy group, hydrogen atoms in the hydrocarbon group or the trialkylsilyloxy group are optionally replaced by fluorine atoms, a plurality of R^{a11}s, when present, are optionally different from each other, A^{a11} represents a hydroxy group or a hydrolyzable group, a plurality of A^{a11}s, when present, are optionally different from each other, Z^{s1} represents -O- or a divalent hydrocarbon group, -CH₂- in the divalent hydrocarbon group is optionally replaced by -O-, Y^{s1} represents a single bond or -Si(R^{s2}) ₂-L^{s1}-, L^{s1} represents a divalent hydrocarbon group, -CH₂- in the divalent hydrocarbon group is optionally replaced by -O-, r2 represents an integer of 0 to 3, r10 represents an integer of 1 or more, and * represents a bond.

By mixing the compound (A1) with the mixed composition, the liquid-repellent property (water-repellent property in particular), in particular, the slip drop property of the liquid droplet in the film (slip drop property of water droplet in particular) is improved.

First, the moiety represented by the following formula (s2) (hereinafter, sometimes referred to as a molecular chain (s2)) in the group represented by the above formula (a11) will be described.

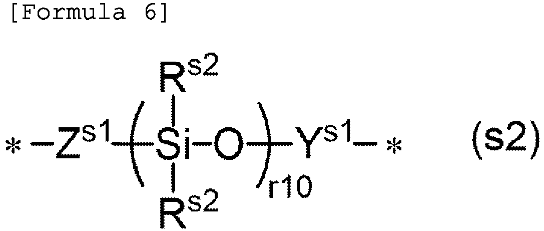

In the molecular chain (s2), the number of carbon atoms in the alkyl group represented by R^{s2} is preferably 1 to 4, more preferably 1 to 3, still more preferably 1 to 2. Examples of the alkyl group represented by R^{s2} include a methyl group, an ethyl group, a propyl group, and a butyl group, and among them, a methyl group or an ethyl group is preferable, with a methyl group being particularly preferable.

In the molecular chain (s2), r10 is preferably an integer of 1 to 100, more preferably an integer of 1 to 80, still more preferably an integer of 1 to 60, particularly preferably an integer of 1 to 50, most preferably an integer of 1 to 30.

In the molecular chain (s2), the number of carbon atoms in the divalent hydrocarbon group represented by Z^{s1} or L^{s1} is preferably 1 to 10, more preferably 1 to 6, still more preferably 1 to 4. The divalent hydrocarbon group is preferably chainlike, and may be linear or branched when the divalent hydrocarbon group is chainlike. The divalent hydrocarbon group is preferably a divalent aliphatic hydrocarbon group, which is preferably an alkanediyl group. Examples of the divalent hydrocarbon group include alkanediyl groups such as a methylene group, an ethylene group, a propylene group and a butylene group. Further, some of -CH₂-s in the divalent hydrocarbon group are optionally replaced by -O-. In this case, both two consecutive -CH₂-s are not replaced by -O-, and -CH₂-adjacent to the Si atom is not replaced by -O-. When two or more -CH₂-s are replaced by -O-, the number of carbon atoms between -O- and -O- is preferably 2 to 4, more preferably 2 or 3. As the group in which a part of the divalent hydrocarbon group is replaced by -O-, specifically, groups having a (poly)ethylene glycol unit, groups having a (poly)propylene glycol unit, and the like can be exemplified.

In the molecular chain (s2), Z^{s1} is preferably -O- or a divalent aliphatic hydrocarbon group, more preferably-O-.

In the molecular chain (s2), Y^{s1} is preferably a single bond.

Preferably, Z^{s1} is -O- and Y^{s1} is a single bond in the molecular chain (s2), i.e. the molecular chain (s2) consists only of repeated dialkylsilyloxy groups.

Examples of the molecular chain (s2) include molecular chains represented by the following formulae. In the formula, r21 represents an integer of 1 or more, and * represents a bond to a silicon atom. r21 is in the same numerical range as that for r10 above, and the same applies to the preferred range.

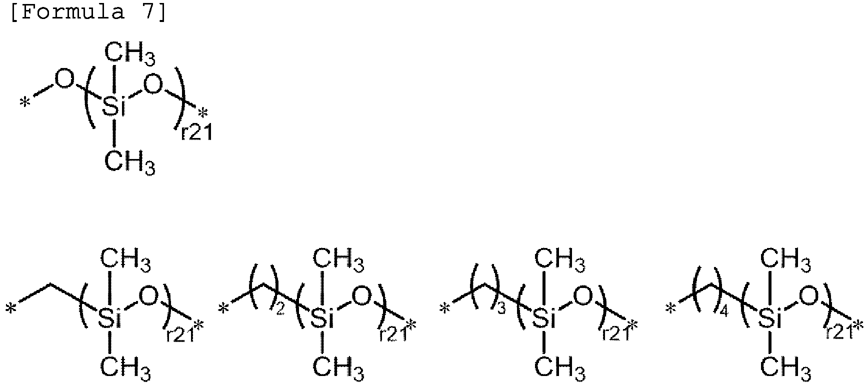

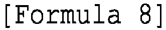

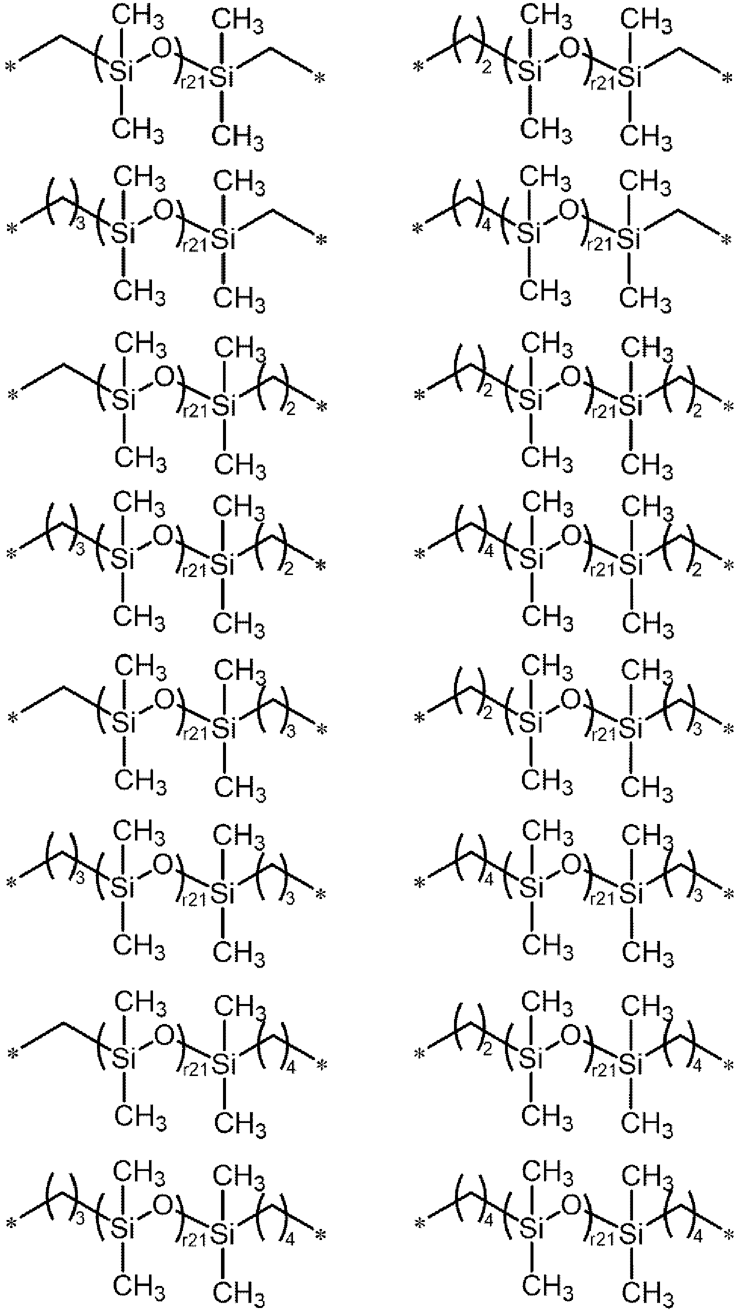

Next, moieties other than the molecular chain (s2) in the group represented by the above formula (a11) will be described. In formula (a11), R^{a11} represents a hydrocarbon group or a trialkylsilyloxy group, and hydrogen atoms in the hydrocarbon group or the trialkylsilyloxy group are optionally replaced by fluorine atoms. The number of the replacing fluorine atoms is preferably 1 or more, more preferably 3 or more, and preferably equal to or less than 2 × A + 1 where A is the number of carbon atoms.

When R^{a11} is a hydrocarbon group, the number of carbon atoms in the group is preferably 1 to 4, more preferably 1 to 3, still more preferably 1 or 2. When R^{a11} is a hydrocarbon group, an aliphatic hydrocarbon group is preferable, and an alkyl group is more preferable. Examples of the alkyl group include a methyl group, an ethyl group, a propyl group and a butyl group.

When R^{a11} is a trialkylsilyloxy group, the number of carbon atoms in the alkyl group forming the trialkylsilyloxy group is preferably 1 to 4, more preferably 1 to 3, still more preferably 1 or 2. Examples of the alkyl group include a methyl group, an ethyl group, a propyl group and a butyl group. The three alkyl groups forming the trialkylsilyloxy group may be the same or different, and are preferably the same. The trialkylsilyloxy group means a group in which an oxygen atom is bonded to a silicon atom of a trialkylsilyl group.

In formula (a11), A^{a11} represents a hydroxy group or a hydrolyzable group. The hydrolyzable group may be a group which gives a hydroxy group (silanol group) when hydrolyzed, and preferred examples thereof include alkoxy groups having 1 to 4 carbon atoms, such as a methoxy group, an ethoxy group, a propoxy group and a butoxy group; an acetoxy group; a chlorine atom; and an isocyanate group. A^{a11} is more preferably an alkoxy group having 1 to 4 carbon atoms, still more preferably an alkoxy group having 1 or 2 carbon atoms.

R^{a1} represented by the above formula (a11) is preferably a group represented by the following formula (a11-1) or formula (a-11-2).

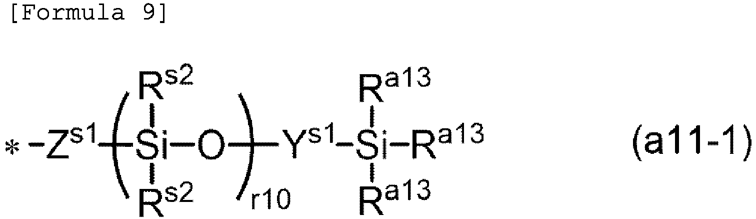

In formula (a11-1), Z^{s1}, R^{s2}, Y^{s1}, and r10 have the same meanings as described above, R^{a13}s each independently represent a hydrocarbon group or a trialkylsilyloxy group, hydrogen atoms in the hydrocarbon group or the trialkylsilyloxy group are optionally replaced by fluorine atoms, and * represents a bond to a silicon atom.

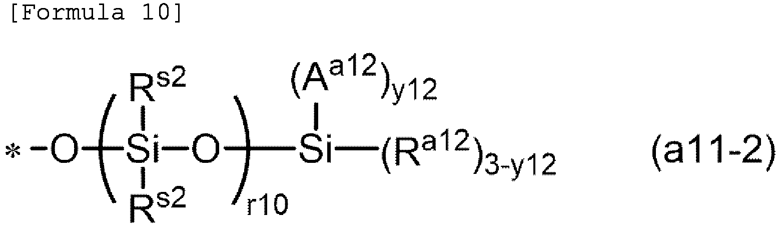

In formula (a11-2), R^{s2} and r10 have the same meanings as described above, A^{a12} represents a hydroxy group or a hydrolyzable group, a plurality of A^{a12}s, when present, are optionally different from each other, R^{a12} represents a hydrocarbon group, a plurality of R^{a12}s, when present, are optionally different from each other, y12 represents an integer of 1 to 3, and * represents a bond to a silicon atom.

First, the group represented by formula (a11-1) will be described. Examples of the hydrocarbon group represented by R^{a13} in formula (a11-1) include those similar to the hydrocarbon groups described for R^{a11} above, and the hydrocarbon group is preferably an alkyl group having 1 to 4 carbon atoms, more preferably an alkyl group having 1 to 3 carbon atoms, still more preferably an alkyl group having 1 or 2 carbon atoms. In particular, when all R^{a13}s are hydrocarbon groups, R^{a13} is preferably an alkyl group. The three R^{a13}s may be the same or different, and are preferably the same. When all R^{a13}s are hydrocarbon groups, the total number of carbon atoms of the three R^{a13}s is preferably 9 or less, more preferably 6 or less, still more preferably 4 or less. Preferably at least one, more preferably at least two, particularly preferably all of the three R^{a13}s are methyl groups.

Examples of the trialkylsilyloxy group represented by R^{a13} in formula (a11-1) include those similar to the trialkylsilyloxy groups described for R^{a11} above, and the same applies to the preferred range. In formula (a11-1), at least one of the R^{a13}s may be a trialkylsilyloxy group, and it is also preferable that all of the R^{a13}s be trialkylsilyloxy groups.

The group represented by formula (a11-1) is more preferably a group of the following formula (s3-1), still more preferably a group of the following formula (s3-1-1). It is also more preferable that the group represented by formula (a11-2) be a group represented by the following formula (s3-2), still more preferably a group represented by the following formula (s3-2-1).

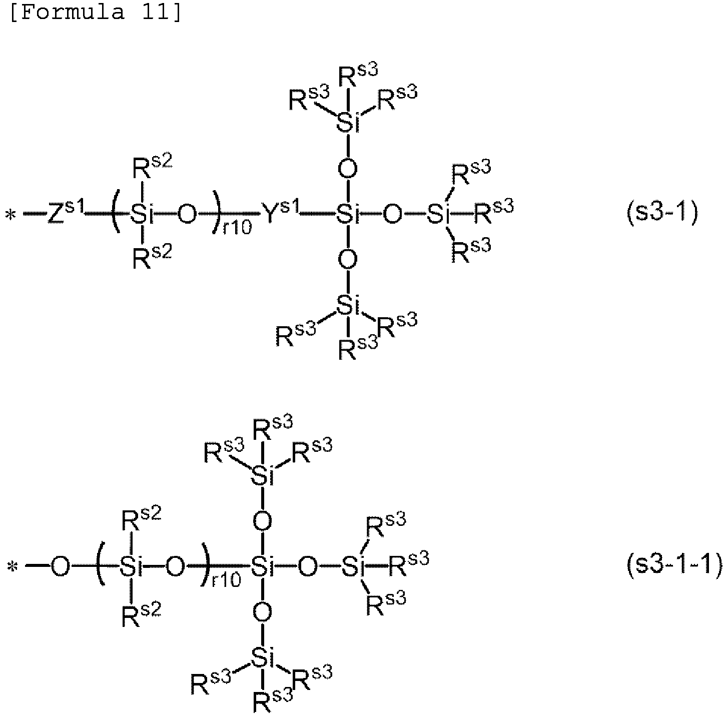

In formula (s3-1) and (s3-1-1), Z^{s1}, R^{s2}, Y^{s1}, and r10 have the same meanings as described above. R^{s3} represents an alkyl group having 1 to 4 carbon atoms, and * represents a bond to a silicon atom.

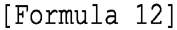

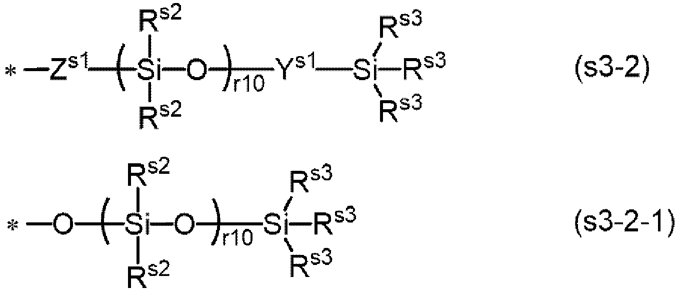

In formula (s3-2) and formula (s3-2-1), Z^{s1}, R^{s2}, Y^{s1}, R^{s3}, and r10 have the same meanings as described above. * represents a bond to a silicon atom.

The number of carbon atoms in the alkyl group represented by R^{s3} is preferably 1 to 3, more preferably 1 or 2. In formulae (s3-1), (s3-1-1), (s3-2) and (s3-2-1), the total number of carbon atoms in R^{s3}s in -Si(R^{s3})₃ is preferably 9 or less, more preferably 6 or less, still more preferably 4 or less. Further, preferably at least one, more preferably at least two, particularly preferably all of the three R^{s3}s in -Si(R^{s3})₃ are methyl groups.

Examples of the group represented by formula (a11-1) include groups represented by formula (s3-I). In formula (s3-I), combinations of Z^{s10}, R^{s20}, n10, Y^{s10} and R^{s10} are preferably those shown in the tables below.

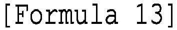

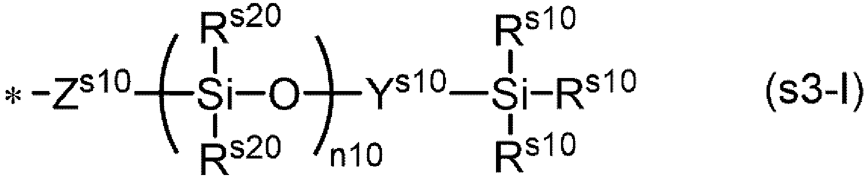

| [Table 1] | | | | | |
|---|---|---|---|---|---|
| | Z^{s10} | R^{s20} | n10 | Y^{s10} | R^{s10} |
| (s3-I-1) | ^{∗}-O-^{∗} | CH₃-^{∗} | 1∼60 | - | (CH₃)₃SiO-^{∗} |
| (s3-I-2) | ^{∗}-O-^{∗} | CH₃-^{∗} | 1~60 | ^{∗}-Si(CH₃)₂-CH₂-^{∗} | (CH₃)₃SiO-^{∗} |
| (s3-I-3) | ^{∗}-O-^{∗} | CH₃-^{∗} | 1∼60 | ^{∗}-Si(CH₃)₂-(CH₂)₂-^{∗} | (CH₃)₃SiO-^{∗} |
| (s3-I-4) | ^{∗}-O-^{∗} | CH₃-^{∗} | 1∼60 | ^{∗}-Si(CH₃)₂-(CH₂)₃-^{∗} | (CH₃)₃SiO-^{∗} |
| (s3-I-5) | ^{∗}-O-^{∗} | CH₃-^{∗} | 1∼60 | ^{∗}-Si(CH₃)₂-(CH₂)₄-^{∗} | (CH₃)₃SiO-^{∗} |
| (s3-I-6) | ^{∗}-CH₂-^{∗} | CH₃-^{∗} | 1∼60 | - | (CH₃)₃SiO-^{∗} |
| (s3-I-7) | ^{∗}-CH₂-^{∗} | CH₃-^{∗} | 1~60 | ^{∗}-Si(CH₃)₂-CH₂-^{∗} | (CH₃)₃SiO-^{∗} |
| (s3-I-8) | ^{∗}-CH₂-^{∗} | CH₃-^{∗} | 1∼60 | ^{∗}-Si(CH₃)₂-(CH₂)₂-^{∗} | (CH₃)₃SiO-^{∗} |
| (s3-I-9) | ^{∗}-CH₂-^{∗} | CH₃-^{∗} | 1∼60 | ^{∗}-Si(CH₃)₂-(CH₂)₃-^{∗} | (CH₃)₃SiO-^{∗} |
| (s3-I-10) | ^{∗}-CH₂-^{∗} | CH₃-^{∗} | 1∼60 | ^{∗}-Si(CH₃)₂-(CH₂)₄-^{∗} | (CH₃)₃SiO-^{∗} |
| (s3-I-11) | ^{∗}-(CH₂)₂-^{∗} | CH₃-^{∗} | 1∼60 | - | (CH₃)₃SiO-^{∗} |
| (s3-I-12) | ^{∗}-(CH₂)₂-^{∗} | CH₃-^{∗} | 1∼60 | ^{∗}-Si(CH₃)₂-CH₂-^{∗} | (CH₃)₃SiO-^{∗} |
| (s3-I-13) | ^{∗}-(CH₂)₂-^{∗} | CH₃-^{∗} | 1∼60 | ^{∗}-Si(CH₃)₂-(CH₂)₂-^{∗} | (CH₃)₃SiO-^{∗} |
| (s3-I-14) | ^{∗}-(CH₂)₂-^{∗} | CH₃-^{∗} | 1∼60 | ^{∗}-Si(CH₃)₂-(CH₂)₃-^{∗} | (CH₃)₃SiO-^{∗} |
| (s3-I-15) | ^{∗}-(CH₂)₂-^{∗} | CH₃-^{∗} | 1∼60 | ^{∗}-Si(CH₃)₂-(CH₂)₄-^{∗} | (CH₃)₃SiO-^{∗} |
| (s3-I-16) | ^{∗}-(CH₂)₃-^{∗} | CH₃-^{∗} | 1∼60 | - | (CH₃)₃SiO-^{∗} |
| (s3-I-17) | ^{∗}-(CH₂)₃-^{∗} | CH₃-^{∗} | 1∼60 | ^{∗}-Si(CH₃)₂-CH₂-^{∗} | (CH₃)₃SiO-^{∗} |
| (s3-I-18) | ^{∗}-(CH₂)₃-^{∗} | CH₃-^{∗} | 1∼60 | ^{∗}-Si(CH₃)₂-(CH₂)₂-^{∗} | (CH₃)₃SiO-^{∗} |
| (s3-I-19) | ^{∗}-(CH₂)₃-^{∗} | CH₃-^{∗} | 1∼60 | ^{∗}-Si(CH₃)₂-(CH₂)₃-^{∗} | (CH₃)₃SiO-^{∗} |
| (s3-I-20) | ^{∗}-(CH₂)₃-^{∗} | CH₃-^{∗} | 1∼60 | ^{∗}-Si(CH₃)₂-(CH₂)₄-^{∗} | (CH₃)₃SiO-^{∗} |
| (s3-I-21) | ^{∗}-(CH₂)₄-^{∗} | CH₃-^{∗} | 1∼60 | - | (CH₃)₃SiO-^{∗} |
| (s3-I-22) | ^{∗}-(CH₂)₄-^{∗} | CH₃-^{∗} | 1∼60 | ^{∗}-Si(CH₃)₂-CH₂-^{∗} | (CH₃)₃SiO-^{∗} |
| (s3-I-23) | ^{∗}-(CH₂)₄-^{∗} | CH₃-^{∗} | 1∼60 | ^{∗}-Si(CH₃)₂-(CH₂)₂-^{∗} | (CH₃)₃SiO-^{∗} |
| (s3-I-24) | ^{∗}-(CH₂)₄-^{∗} | CH₃-^{∗} | 1∼60 | ^{∗}-Si(CH₃)₂-(CH₂)₃-^{∗} | (CH₃)₃SiO-^{∗} |
| (s3-I-25) | ^{∗}-(CH₂)₄-^{∗} | CH₃-^{∗} | 1∼60 | ^{∗}-Si(CH₃)₂-(CH₂)₄-^{∗} | (CH₃)₃SiO-^{∗} |

**[Table 2]**

| | Z^{s10} | R^{s20} | n10 | Y^{s10} | R^{s10} |
|---|---|---|---|---|---|
| (s3-I-26) | ^{∗}-O-^{∗} | CH₃-^{∗} | 1∼60 | - | CH₃-^{∗} |
| (s3-I-27) | ^{∗}-O-^{∗} | CH₃-^{∗} | 1~60 | ^{∗}-Si(CH₃)₂-CH₂-^{∗} | CH₃-^{∗} |
| (s3-I-28) | ^{∗}-O-^{∗} | CH₃-^{∗} | 1∼60 | ^{∗}-Si(CH₃)₂-(CH₂)₂-^{∗} | CH₃-^{∗} |
| (s3-I-29) | ^{∗}-O-^{∗} | CH₃-^{∗} | 1∼60 | ^{∗}-Si(CH₃)₂-(CH₂)₃-^{∗} | CH₃-^{∗} |
| (s3-I-30) | ^{∗}-O-^{∗} | CH₃-^{∗} | 1∼60 | ^{∗}-Si(CH₃)₂-(CH₂)₄-^{∗} | CH₃-^{∗} |
| (s3-I-31) | ^{∗}-CH₂-^{∗} | CH₃-^{∗} | 1∼60 | - | CH₃-^{∗} |
| (s3-I-32) | ^{∗}-CH₂-^{∗} | CH₃-^{∗} | 1~60 | ^{∗}-Si(CH₃)₂-CH₂-^{∗} | CH₃-^{∗} |
| (s3-I-33) | ^{∗}-CH₂-^{∗} | CH₃-^{∗} | 1∼60 | ^{∗}-Si(CH₃)₂-(CH₂)₂-^{∗} | CH₃-^{∗} |
| (s3-I-34) | ^{∗}-CH₂-^{∗} | CH₃-^{∗} | 1∼60 | ^{∗}-Si(CH₃)₂-(CH₂)₃-^{∗} | CH₃-^{∗} |
| (s3-I-35) | ^{∗}-CH₂-^{∗} | CH₃-^{∗} | 1∼60 | ^{∗}-Si(CH₃)₂-(CH₂)₄-^{∗} | CH₃-^{∗} |
| (s3-I-36) | ^{∗}-(CH₂)₂-^{∗} | CH₃-^{∗} | 1∼60 | - | CH₃-^{∗} |
| (s3-I-37) | ^{∗}-(CH₂)₂-^{∗} | CH₃-^{∗} | 1∼60 | ^{∗}-Si(CH₃)₂-CH₂-^{∗} | CH₃-^{∗} |
| (s3-I-38) | ^{∗}-(CH₂)₂-^{∗} | CH₃-^{∗} | 1∼60 | ^{∗}-Si(CH₃)₂-(CH₂)₂-^{∗} | CH₃-^{∗} |
| (s3-I-39) | ^{∗}-(CH₂)₂-^{∗} | CH₃-^{∗} | 1∼60 | ^{∗}-Si(CH₃)₂-(CH₂)₃-^{∗} | CH₃-^{∗} |
| (s3-I-40) | ^{∗}-(CH₂)₂-^{∗} | CH₃-^{∗} | 1∼60 | ^{∗}-Si(CH₃)₂-(CH₂)₄-^{∗} | CH₃-^{∗} |
| (s3-I-41) | ^{∗}-(CH₂)₃-^{∗} | CH₃-^{∗} | 1∼60 | - | CH₃-^{∗} |
| (s3-I-42) | ^{∗}-(CH₂)₃-^{∗} | CH₃-^{∗} | 1∼60 | ^{∗}-Si(CH₃)₂-CH₂-^{∗} | CH₃-^{∗} |
| (s3-I-43) | ^{∗}-(CH₂)₃-^{∗} | CH₃-^{∗} | 1∼60 | ^{∗}-Si(CH₃)₂-(CH₂)₂-^{∗} | CH₃-^{∗} |
| (s3-I-44) | ^{∗}-(CH₂)₃-^{∗} | CH₃-^{∗} | 1∼60 | ^{∗}-Si(CH₃)₂-(CH₂)₃-^{∗} | CH₃-^{∗} |
| (s3-I-45) | ^{∗}-(CH₂)₃-^{∗} | CH₃-^{∗} | 1∼60 | ^{∗}-Si(CH₃)₂-(CH₂)₄-^{∗} | CH₃-^{∗} |
| (s3-I-46) | ^{∗}-(CH₂)₄-^{∗} | CH₃-^{∗} | 1∼60 | - | CH₃-^{∗} |
| (s3-I-47) | ^{∗}-(CH₂)₄-^{∗} | CH₃-^{∗} | 1∼60 | ^{∗}-Si(CH₃)₂-CH₂-^{∗} | CH₃-^{∗} |
| (s3-I-48) | ^{∗}-(CH₂)₄-^{∗} | CH₃-^{∗} | 1∼60 | ^{∗}-Si(CH₃)₂-(CH₂)₂-^{∗} | CH₃-^{∗} |
| (s3-I-49) | ^{∗}-(CH₂)₄-^{∗} | CH₃-^{∗} | 1∼60 | ^{∗}-Si(CH₃)₂-(CH₂)₃-^{∗} | CH₃-^{∗} |
| (s3-I-50) | ^{∗}-(CH₂)₄-^{∗} | CH₃-^{∗} | 1∼60 | ^{∗}-Si(CH₃)₂-(CH₂)₄-^{∗} | CH₃-^{∗} |

n10 shown in Tables 1 and 2 above is preferably an integer of 1 to 30.

Next, the group represented by formula (a11-2) will be described. In formula (a11-2), A^{a12} represents a hydroxy group or a hydrolyzable group, and the hydrolyzable group may be a group which gives a hydroxy group (silanol group) when hydrolyzed, and preferred examples thereof include alkoxy groups having 1 to 4 carbon atoms, such as a methoxy group, an ethoxy group, a propoxy group and a butoxy group; an acetoxy group; a chlorine atom; and an isocyanate group. A^{a12} is preferably an alkoxy group having 1 to 4 carbon atoms or a hydroxy group, more preferably an alkoxy group having 1 or 2 carbon atoms or a hydroxy group. A plurality of A^{a12}s, when present, may be the same or different, and are preferably the same.

Examples of the hydrocarbon group represented by R^{a12} in formula (a11-2) include those similar to the hydrocarbon groups described for R^{a11} above, and the hydrocarbon group is preferably an alkyl group having 1 to 4 carbon atoms, more preferably a methyl group or an ethyl group, still more preferably a methyl group. A plurality of R^{a12}s, when present, may be the same or different, and are preferably the same.

In formula (a11-2), y12 is preferably 1 or 3.

Examples of the group represented by formula (a11-2) include groups represented by formula (s3-II). In formula (s3-II), combinations of A^{a0}, R^{s22}, n20, y0 and R^{a0} are preferably those shown in the tables below.

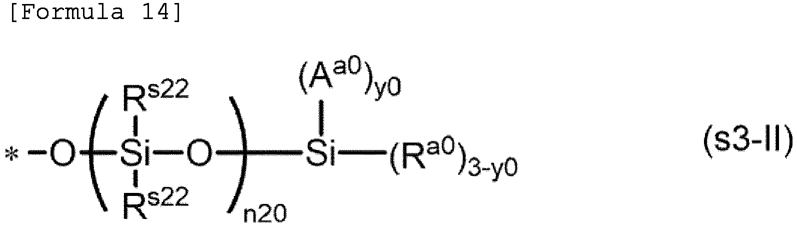

**[Table 3]**

| | A^{a0} | R^{s22} | n20 | y0 | R^{a0} |
|---|---|---|---|---|---|
| (s3-II-1) | C₂H₅O-^{∗} | CH₃-^{∗} | 1∼60 | 1 | CH₃-^{∗} |
| (s3-II-2) | CH₃O-^{∗} | CH₃-^{∗} | 1∼60 | 1 | CH₃-^{∗} |
| (s3-II-3) | HO-^{∗} | CH₃-^{∗} | 1∼60 | 1 | CH₃-^{∗} |
| (s3-II-4) | C₂H₅O-^{∗} | CH₃-^{∗} | 1∼60 | 1 | C₂H₅-^{∗} |
| (s3-II-5) | CH₃O-^{∗} | CH₃-^{∗} | 1∼60 | 1 | C₂H₅-^{∗} |
| (s3-II-6) | HO-^{∗} | CH₃-^{∗} | 1∼60 | 1 | C₂H₅-^{∗} |
| (s3-II-7) | C₂H₅O-^{∗} | CH₃-^{∗} | 1∼60 | 2 | CH₃-^{∗} |
| (s3-II-8) | CH₃O-^{∗} | CH₃-^{∗} | 1∼60 | 2 | CH₃-^{∗} |
| (s3-II-9) | HO-^{∗} | CH₃-^{∗} | 1∼60 | 2 | CH₃-^{∗} |
| (s3-II-10) | C₂H₅O-^{∗} | CH₃-^{∗} | 1∼60 | 2 | C₂H₅-^{∗} |
| (s3-II-11) | CH₃O-^{∗} | CH₃-^{∗} | 1∼60 | 2 | C₂H₅-^{∗} |
| (s3-II-12) | HO-^{∗} | CH₃-^{∗} | 1∼60 | 2 | C₂H₅-^{∗} |
| (s3-II-13) | C₂H₅O-^{∗} | CH₃-^{∗} | 1∼60 | 3 | - |
| (s3-II-14) | CH₃O-^{∗} | CH₃-^{∗} | 1∼60 | 3 | - |
| (s3-II-15) | HO-^{∗} | CH₃-^{∗} | 1∼60 | 3 | |

n20 shown in Table 3 above is preferably an integer of 1 to 30.

Next, formula (a1) will be described. A^{a1} in formula (a1) represents a hydroxy group or a hydrolyzable group, and the hydrolyzable group may be a group which gives a hydroxy group (silanol group) when hydrolyzed, and preferred examples thereof include alkoxy groups having 1 to 4 carbon atoms, such as a methoxy group, an ethoxy group, a propoxy group and a butoxy group; an acetoxy group; a chlorine atom; and an isocyanate group. A^{a1} is preferably an alkoxy group having 1 to 4 carbon atoms, more preferably an alkoxy group having 1 or 2 carbon atoms. A plurality of A^{a1}s, when present, may be the same or different, and are preferably the same.

Z^{a1} in formula (a1) represents a hydrocarbon group, a trialkylsilyl group-containing molecular chain or a siloxane backbone-containing group.

When Z^{a1} is a hydrocarbon group, the number of carbon atoms thereof is preferably 1 to 4, more preferably 1 to 3, still more preferably 1 or 2. When Z^{a1} is a hydrocarbon group, an aliphatic hydrocarbon group is preferable, and an alkyl group is more preferable. Examples of the alkyl group include a methyl group, an ethyl group, a propyl group and a butyl group, and among them, a methyl group or an ethyl group is still more preferable, with a methyl group being particularly preferable.

The trialkylsilyl group-containing molecular chain means a monovalent group having a structure in which a trialkylsilyl-containing group is bonded to an end of the molecular chain. When Z^{a1} is a trialkylsilyl group-containing molecular chain, a group of the above formula (a11-1) is preferable where when all R^{a13}s are hydrocarbon groups, the R^{a13}s are alkyl groups.

When Z^{a1} is a siloxane backbone-containing group, the siloxane backbone-containing group is preferably a monovalent group containing a siloxane unit (Si-O-) and consisting of atoms whose number is smaller than the number of atoms forming R^{a1}. This makes the siloxane backbone-containing group smaller in length or three-dimensional extent (bulkiness) than R^{a1}. The siloxane backbone-containing group may contain a divalent hydrocarbon group. The siloxane backbone-containing group is preferably a group represented by the following formula (s4).

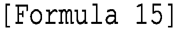

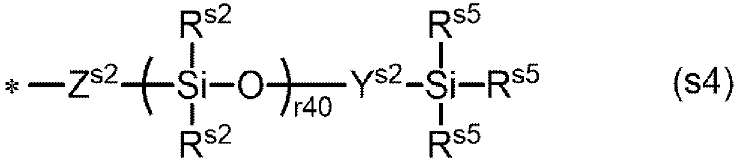

In formula (s4), R^{s2}s have the same meaning as described above, and each independently represent an alkyl group having 1 to 4 carbon atoms.

R^{s5} represents a hydrocarbon group or a hydroxy group, -CH₂- in the hydrocarbon group is optionally replaced by -O-, and hydrogen atoms in the hydrocarbon group are optionally replaced by fluorine atoms.

Z^{s2} represents -O- or a divalent hydrocarbon group, and -CH₂- in the divalent hydrocarbon group is optionally replaced by -O-.

Y^{s2} represents a single bond or -Si(R^{s2})₂-L^{s2}-. L^{s2} represents a divalent hydrocarbon group, and -CH₂- in the divalent hydrocarbon group is optionally replaced by -O-.

r40 represents an integer of 0 to 5. * represents a bond to a silicon atom.

Examples of the hydrocarbon group represented by R^{s5} in formula (s4) include those similar to the hydrocarbon group described for R^{a11} above, and the hydrocarbon group is preferably an aliphatic hydrocarbon group, more preferably an alkyl group. The number of carbon atoms is preferably 1 to 4, more preferably 1 to 3, still more preferably 1 or 2.

Examples of the divalent hydrocarbon group represented by Z^{s2} or L^{s2} include groups similar to the divalent hydrocarbon groups represented by Z^{s1}, and the number of carbon atoms is preferably 1 to 10, more preferably 1 to 6, still more preferably 1 to 4. The divalent hydrocarbon group represented by Z^{s2} or L^{s2} is preferably a divalent aliphatic hydrocarbon group, more preferably a linear or branched alkanediyl group.

r40 is preferably an integer of 1 to 5, more preferably an integer of 1 to 3.

The total number of atoms in the siloxane backbone-containing group is preferably 100 or less, more preferably 50 or less, still more preferably 30 or less, and preferably 10 or more. The difference between the number of atoms in R^{a1} and the number of atoms in the siloxane backbone-containing group is 10 or more, more preferably 20 or more, and preferably 1000 or less, more preferably 500 or less, still more preferably 200 or less.

Specific examples of the siloxane backbone-containing group include groups represented by the following formulae.

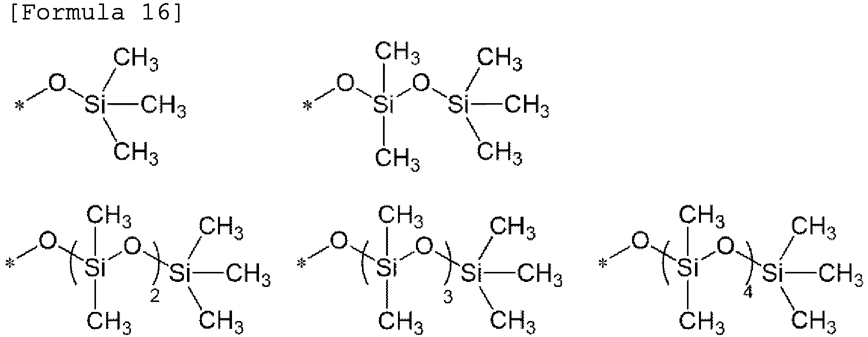

r1 in formula (a1) represents an integer of 1 to 3, preferably 2 or 3, more preferably 3.

Examples of the compound (A1) represented by formula (a1) include compounds represented by the following formula (a1-1) or the following formula (a1-2).

Examples of the compound (A1) represented by formula (a1) include compounds represented by the following formula (a1-1), i.e. compounds in which R^{a1} in formula (a1) is a group represented by formula (a11-1) and r1 in formula (a1) is 3.

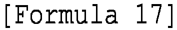

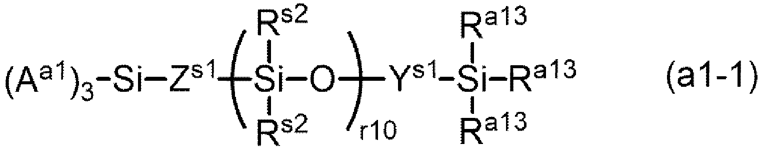

In formula (a1-1), A^{a1}, Z^{s1}, R^{s2}, Y^{s1}, R^{a13} and r10 have the same meanings as those described above.

Among compounds represented by formula (a1-1), compounds represented by the following formula (1-1) are preferable, and compounds represented by formula (1-1-1) are more preferable. The compound represented by formula (a1-1) may be a compound represented by the following formula (1-2), and is preferably a compound represented by formula (1-2-1).

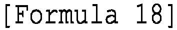

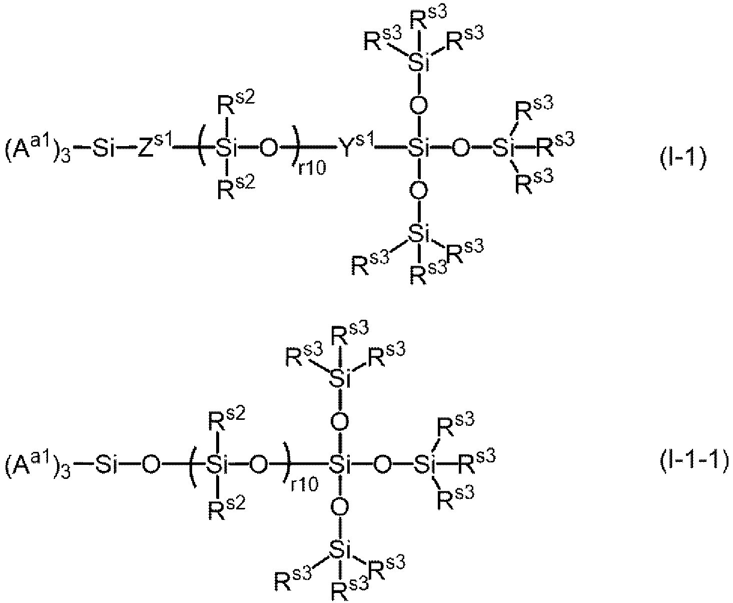

In formulae (1-1) and (I-1-1), A^{a1}, Z^{s1}, R^{s2}, Y^{s1}, R^{s3} and r10 have the same meanings as those described above.

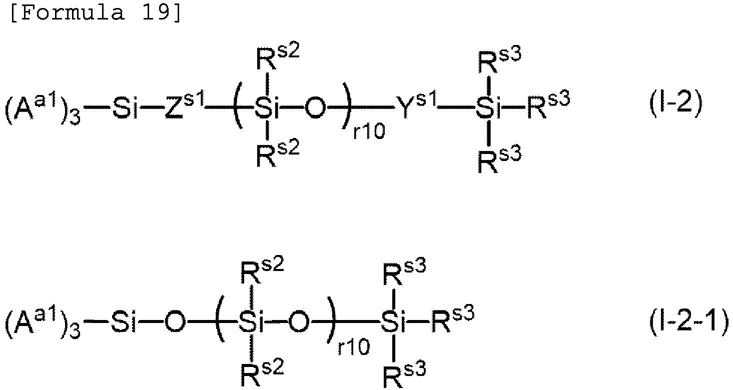

In formulae (1-2) and (1-2-1), A^{a1}, Z^{s1}, R^{s2}, Y^{s1}, R^{s3} and r10 have the same meanings as those described above.

Specific examples of the compound represented by formula (a1-1) include compounds represented by formula (I-I). In formula (I-I), combinations of A^{a20}, Z^{s10}, R^{s20}, n10, Y^{s10} and R^{s10} are preferably those shown in the tables below.

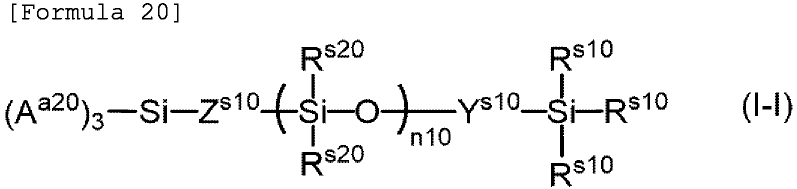

**[Table 4-1]**

| | A^{a20} | Z^{s10} | R^{s20} | n10 | Y^{s10} | R^{s10} |
|---|---|---|---|---|---|---|
| (I-I-1) | C₂H₅O-^{∗} | ^{∗}-O-^{∗} | CH₃-^{∗} | 1∼60 | - | (CH₃)₃SiO-^{∗} |
| (I-I-2) | C₂H₅O-^{∗} | ^{∗}-O-^{∗} | CH₃-^{∗} | 1∼60 | ^{∗}-Si(CH₃)₂-CH₂-^{∗} | (CH₃)₃SiO-^{∗} |
| (I-I-3) | C₂H₅O-^{∗} | ^{∗}-O-^{∗} | CH₃-^{∗} | 1~60 | ^{∗}-Si(CH₃)₂-(CH₂)₂-^{∗} | (CH₃)₃SiO-^{∗} |
| (I-I-4) | C₂H₅O-^{∗} | ^{∗}-O-^{∗} | CH₃-^{∗} | 1~60 | ^{∗}-Si(CH₃)₂-(CH₂)₃-^{∗} | (CH₃)₃SiO-^{∗} |
| (I-I-5) | C₂H₅O-^{∗} | ^{∗}-O-^{∗} | CH₃-^{∗} | 1∼60 | ^{∗}-Si(CH₃)₂-(CH₂)₄-^{∗} | (CH₃)₃SiO-^{∗} |
| (I-I-6) | C₂H₅O-^{∗} | ^{∗}-CH₂-^{∗} | CH₃-^{∗} | 1~60 | - | (CH₃)₃SiO-^{∗} |
| (I-I-7) | C₂H₅O-^{∗} | ^{∗}-CH₂-^{∗} | CH₃-^{∗} | 1~60 | ^{∗}-Si(CH₃)₂-CH₂-^{∗} | (CH₃)₃SiO-^{∗} |
| (I-I-8) | C₂H₅O-^{∗} | ^{∗}-CH₂-^{∗} | CH₃-^{∗} | 1~60 | ^{∗}-Si(CH₃)₂-(CH₂)₂-^{∗} | (CH₃)₃SiO-^{∗} |
| (I-I-9) | C₂H₅O-^{∗} | ^{∗}-CH₂-^{∗} | CH₃-^{∗} | 1~60 | ^{∗}-Si(CH₃)₂-(CH₂)₃-^{∗} | (CH₃)₃SiO-^{∗} |
| (I-I-10) | C₂H₅O-^{∗} | ^{∗}-CH₂-^{∗} | CH₃-^{∗} | 1~60 | ^{∗}-Si(CH₃)₂-(CH₂)₄-^{∗} | (CH₃)₃SiO-^{∗} |
| (I-I-11) | C₂H₅O-^{∗} | ^{∗}-(CH₂)₂-^{∗} | CH₃-^{∗} | 1~60 | - | (CH₃)₃SiO-^{∗} |
| (I-I-12) | C₂H₅O-^{∗} | ^{∗}-(CH₂)₂-^{∗} | CH₃-^{∗} | 1∼60 | ^{∗}-Si(CH₃)₂-CH₂-^{∗} | (CH₃)₃SiO-^{∗} |
| (I-I-13) | C₂H₅O-^{∗} | ^{∗}-(CH₂)₂-^{∗} | CH₃-^{∗} | 1~60 | ^{∗}-Si(CH₃)₂-(CH₂)₂-^{∗} | (CH₃)₃SiO-^{∗} |
| (I-I-14) | C₂H₅O-^{∗} | ^{∗}-(CH₂)₂-^{∗} | CH₃-^{∗} | 1~60 | ^{∗}-Si(CH₃)₂-(CH₂)₃-^{∗} | (CH₃)₃SiO-^{∗} |
| (I-I-15) | C₂H₅O-^{∗} | ^{∗}-(CH₂)₂-^{∗} | CH₃-^{∗} | 1∼60 | ^{∗}-Si(CH₃)₂-(CH₂)₄-^{∗} | (CH₃)₃SiO-^{∗} |
| (I-I-16) | C₂H₅O-^{∗} | ^{∗}-(CH₂)₃-^{∗} | CH₃-^{∗} | 1~60 | - | (CH₃)₃SiO-^{∗} |
| (I-I-17) | C₂H₅O-^{∗} | ^{∗}-(CH₂)₃-^{∗} | CH₃-^{∗} | 1~60 | ^{∗}-Si(CH₃)₂-CH₂-^{∗} | (CH₃)₃SiO-^{∗} |
| (I-I-18) | C₂H₅O-^{∗} | ^{∗}-(CH₂)₃-^{∗} | CH₃-^{∗} | 1~60 | ^{∗}-Si(CH₃)₂-(CH₂)₂-^{∗} | (CH₃)₃SiO-^{∗} |
| (I-I-19) | C₂H₅O-^{∗} | ^{∗}-(CH₂)₃-^{∗} | CH₃-^{∗} | 1~60 | ^{∗}-Si(CH₃)₂-(CH₂)₃-^{∗} | (CH₃)₃SiO-^{∗} |
| (I-I-20) | C₂H₅O-^{∗} | ^{∗}-(CH₂)₃-^{∗} | CH₃-^{∗} | 1∼60 | ^{∗}-Si(CH₃)₂-(CH₂)₄-^{∗} | (CH₃)₃SiO-^{∗} |
| (I-I-21) | C₂H₅O-^{∗} | ^{∗}-(CH₂)₄-^{∗} | CH₃-^{∗} | 1∼60 | - | (CH₃)₃SiO-^{∗} |
| (I-I-22) | C₂H₅O-^{∗} | ^{∗}-(CH₂)₄-^{∗} | CH₃-^{∗} | 1∼60 | ^{∗}-Si(CH₃)₂-CH₂-^{∗} | (CH₃)₃SiO-^{∗} |
| (I-I-23) | C₂H₅-^{∗} | ^{∗}-(CH₂)₄-^{∗} | CH₃-^{∗} | 1∼60 | ^{∗}-Si(CH₃)₂-(CH₂)₂-^{∗} | (CH₃)₃SiO-^{∗} |
| (I-I-24) | C₂H₅O-^{∗} | ^{∗}-(CH₂)₄-^{∗} | CH₃-^{∗} | 1~60 | ^{∗}-Si(CH₃)₂-(CH₂)₃-^{∗} | (CH₃)₃SiO-^{∗} |
| (I-I-25) | C₂H₅O-^{∗} | ^{∗}-(CH₂)₄-^{∗} | CH₃-^{∗} | 1∼60 | ^{∗}-Si(CH₃)₂-(CH₂)₄-^{∗} | (CH₃)₃SiO-^{∗} |

**[Table 4-2]**

| | A^{a20} | Z^{s10} | R^{s20} | n10 | Y^{s10} | R^{s10} |
|---|---|---|---|---|---|---|
| (I-I-26) | CH₃O-^{∗} | ^{∗}-O-^{∗} | CH₃-^{∗} | 1∼60 | - | (CH₃)₃SiO-^{∗} |
| (I-I-27) | CH₃O-^{∗} | ^{∗}-O-^{∗} | CH₃-^{∗} | 1∼60 | ^{∗}-Si(CH₃)₂-CH₂- ^{∗} | (CH₃)₃SiO-^{∗} |
| (I-I-28) | CH₃O-^{∗} | ^{∗}-O-^{∗} | CH₃-^{∗} | 1~60 | ^{∗}-Si(CH₃)₂-(CH₂)₂-^{∗} | (CH₃)₃SiO-^{∗} |
| (I-I-29) | CH₃O-^{∗} | ^{∗}-O-^{∗} | CH₃-^{∗} | 1~60 | ^{∗}-Si(CH₃)₂-(CH₂)₃-^{∗} | (CH₃)₃SiO-^{∗} |
| (I-I-30) | CH₃O-^{∗} | ^{∗}-O-^{∗} | CH₃-^{∗} | 1∼60 | ^{∗}-Si(CH₃)₂-(CH₂)₄-^{∗} | (CH₃)₃SiO-^{∗} |
| (I-I-31) | CH₃O-^{∗} | ^{∗}-CH₂-^{∗} | CH₃-^{∗} | 1~60 | - | (CH₃)₃SiO-^{∗} |
| (I-I-32) | CH₃O-^{∗} | ^{∗}-CH₂-^{∗} | CH₃-^{∗} | 1~60 | ^{∗}-Si(CH₃)₂-CH₂-^{∗} | (CH₃)₃SiO-^{∗} |
| (I-I-33) | CH₃O-^{∗} | ^{∗}-CH₂-^{∗} | CH₃-^{∗} | 1~60 | ^{∗}-Si(CH₃)₂-(CH₂)₂-^{∗} | (CH₃)₃SiO-^{∗} |
| (I-I-34) | CH₃O-^{∗} | ^{∗}-CH₂-^{∗} | CH₃-^{∗} | 1~60 | ^{∗}-Si(CH₃)₂-(CH₂)₃-^{∗} | (CH₃)₃SiO-^{∗} |
| (I-I-35) | CH₃O-^{∗} | ^{∗}-CH₂-^{∗} | CH₃-^{∗} | 1~60 | ^{∗}-Si(CH₃)₂-(CH₂)₄-^{∗} | (CH₃)₃SiO-^{∗} |
| (I-I-36) | CH₃O-^{∗} | ^{∗}-(CH₂)₂-^{∗} | CH₃-^{∗} | 1~60 | - | (CH₃)₃SiO-^{∗} |
| (I-I-37) | CH₃O-^{∗} | ^{∗}-(CH₂)₂-^{∗} | CH₃-^{∗} | 1∼60 | ^{∗}-Si(CH₃)₂-CH₂-^{∗} | (CH₃)₃SiO-^{∗} |
| (I-I-38) | CH₃O-^{∗} | ^{∗}-(CH₂)₂-^{∗} | CH₃-^{∗} | 1~60 | ^{∗}-Si(CH₃)₂-(CH₂)₂-^{∗} | (CH₃)₃SiO-^{∗} |
| (I-I-39) | CH₃O-^{∗} | ^{∗}-(CH₂)₂-^{∗} | CH₃-^{∗} | 1~60 | ^{∗}-Si(CH₃)₂-(CH₂)₃-^{∗} | (CH₃)₃SiO-^{∗} |
| (I-I-40) | CH₃O-^{∗} | ^{∗}-(CH₂)₂-^{∗} | CH₃-^{∗} | 1∼60 | ^{∗}-Si(CH₃)₂-(CH₂)₄-^{∗} | (CH₃)₃SiO-^{∗} |
| (I-I-41) | CH₃O-^{∗} | ^{∗}-(CH₂)₃-^{∗} | CH₃-^{∗} | 1∼60 | - | (CH₃)₃SiO-^{∗} |
| (I-I-42) | CH₃O-^{∗} | ^{∗}-(CH₂)₃-^{∗} | CH₃-^{∗} | 1~60 | ^{∗}-Si(CH₃)₂-CH₂-^{∗} | (CH₃)₃SiO-^{∗} |
| (I-I-43) | CH₃O-^{∗} | ^{∗}-(CH₂)₃-^{∗} | CH₃-^{∗} | 1~60 | ^{∗}-Si(CH₃)₂-(CH₂)₂-^{∗} | (CH₃)₃SiO-^{∗} |
| (I-I-44) | CH₃O-^{∗} | ^{∗}-(CH₂)₃-^{∗} | CH₃-^{∗} | 1~60 | ^{∗}-Si(CH₃)₂-(CH₂)₃-^{∗} | (CH₃)₃SiO-^{∗} |
| (I-I-45) | CH₃O-^{∗} | ^{∗}-(CH₂)₃-^{∗} | CH₃-^{∗} | 1∼60 | ^{∗}-Si(CH₃)₂-(CH₂)₄-^{∗} | (CH₃)₃SiO-^{∗} |
| (I-I-46) | CH₃O-^{∗} | ^{∗}-(CH₂)₄-^{∗} | CH₃-^{∗} | 1∼60 | - | (CH₃)₃SiO-^{∗} |
| (I-I-47) | CH₃O-^{∗} | ^{∗}-(CH₂)₄-^{∗} | CH₃-^{∗} | 1∼60 | ^{∗}-Si(CH₃)₂-CH₂-^{∗} | (CH₃)₃SiO-^{∗} |
| (I-I-48) | CH₃O-^{∗} | ^{∗}-(CH₂)₄-^{∗} | CH₃-^{∗} | 1∼60 | ^{∗}-Si(CH₃)₂-(CH₂)₂-^{∗} | (CH₃)₃SiO-^{∗} |
| (I-I-49) | CH₃O-^{∗} | ^{∗}-(CH₂)₄-^{∗} | CH₃-^{∗} | 1~60 | ^{∗}-Si(CH₃)₂-(CH₂)₃-^{∗} | (CH₃)₃SiO-^{∗} |
| (I-I-50) | CH₃O-^{∗} | ^{∗}-(CH₂)₄-^{∗} | CH₃-^{∗} | 1∼60 | ^{∗}-Si(CH₃)₂-(CH₂)₄-^{∗} | (CH₃)₃SiO-^{∗} |

**[Table 5-1]**

| | A^{a10} | Z^{s10} | R^{s20} | n10 | Y^{s10} | R^{s10} |
|---|---|---|---|---|---|---|
| (I-I-51) | C₂H₅O-^{∗} | ^{∗}-O-^{∗} | CH₃-^{∗} | 1∼60 | - | CH₃- ^{∗} |
| (I-I-52) | C₂H₅O-^{∗} | ^{∗}-O-^{∗} | CH₃-^{∗} | 1∼60 | ^{∗}-Si(CH₃)₂-CH₂- ^{∗} | CH₃-^{∗} |
| (I-I-53) | C₂H₅O-^{∗} | ^{∗}-O-^{∗} | CH₃-^{∗} | 1~60 | ^{∗}-Si(CH₃)₂-(CH₂)₂-^{∗} | CH₃- ^{∗} |
| (I-I-54) | C₂H₅O-^{∗} | ^{∗}-O-^{∗} | CH₃-^{∗} | 1~60 | ^{∗}-Si(CH₃)₂-(CH₂)₃-^{∗} | CH₃-^{∗} |
| (I-I-55) | C₂H₅O-^{∗} | ^{∗}-O-^{∗} | CH₃-^{∗} | 1∼60 | ^{∗}-Si(CH₃)₂-(CH₂)₄-^{∗} | CH₃-^{∗} |
| (I-I-56) | C₂H₅O-^{∗} | ^{∗}-CH₂-^{∗} | CH₃-^{∗} | 1∼60 | - | CH₃-^{∗} |
| (I-I-57) | C₂H₅O-^{∗} | ^{∗}-CH₂-^{∗} | CH₃-^{∗} | 1~60 | ^{∗}-Si(CH₃)₂-CH₂-^{∗} | CH₃-^{∗} |
| (I-I-58) | C₂H₅O-^{∗} | ^{∗}-CH₂-^{∗} | CH₃-^{∗} | 1~60 | ^{∗}-Si(CH₃)₂-(CH₂)₂-^{∗} | CH₃-^{∗} |
| (I-I-59) | C₂H₅O-^{∗} | ^{∗}-CH₂-^{∗} | CH₃-^{∗} | 1~60 | ^{∗}-Si(CH₃)₂-(CH₂)₃-^{∗} | CH₃-^{∗} |
| (I-I-60) | C₂H₅O-^{∗} | ^{∗}-CH₂-^{∗} | CH₃-^{∗} | 1~60 | ^{∗}-Si(CH₃)₂-(CH₂)₄-^{∗} | CH₃-^{∗} |
| (I-I-61) | C₂H₅O-^{∗} | ^{∗}-(CH₂)₂-^{∗} | CH₃-^{∗} | 1∼60 | - | CH₃-^{∗} |
| (I-I-62) | C₂H₅O-^{∗} | ^{∗}-(CH₂)₂-^{∗} | CH₃-^{∗} | 1∼60 | ^{∗}-Si(CH₃)₂-CH₂-^{∗} | CH₃-^{∗} |
| (I-I-63) | C₂H₅O-^{∗} | ^{∗}-(CH₂)₂-^{∗} | CH₃-^{∗} | 1~60 | ^{∗}-Si(CH₃)₂-(CH₂)₂-^{∗} | CH₃-^{∗} |
| (I-I-64) | C₂H₅O-^{∗} | ^{∗}-(CH₂)₂-^{∗} | CH₃-^{∗} | 1~60 | ^{∗}-Si(CH₃)₂-(CH₂)₃-^{∗} | CH₃-^{∗} |
| (I-I-65) | C₂H₅O-^{∗} | ^{∗}-(CH₂)₂-^{∗} | CH₃-^{∗} | 1∼60 | ^{∗}-Si(CH₃)₂-(CH₂)₄-^{∗} | CH₃-^{∗} |
| (I-I-66) | C₂H₅O-^{∗} | ^{∗}-(CH₂)₃-^{∗} | CH₃-^{∗} | 1∼60 | - | CH₃-^{∗} |
| (I-I-67) | C₂H₅O-^{∗} | ^{∗}-(CH₂)₃-^{∗} | CH₃-^{∗} | 1~60 | ^{∗}-Si(CH₃)₂-CH₂-^{∗} | CH₃-^{∗} |
| (I-I-68) | C₂H₅O-^{∗} | ^{∗}-(CH₂)₃-^{∗} | CH₃-^{∗} | 1~60 | ^{∗}-Si(CH₃)₂-(CH₂)₂-^{∗} | CH₃-^{∗} |
| (I-I-69) | C₂H₅O-^{∗} | ^{∗}-(CH₂)₃-^{∗} | CH₃-^{∗} | 1~60 | ^{∗}-Si(CH₃)₂-(CH₂)₃-^{∗} | CH₃-^{∗} |
| (I-I-70) | C₂H₅O-^{∗} | ^{∗}-(CH₂)₃-^{∗} | CH₃-^{∗} | 1∼60 | ^{∗}-Si(CH₃)₂-(CH₂)₄-^{∗} | CH₃-^{∗} |
| (I-I-71) | C₂H₅O-^{∗} | ^{∗}-(CH₂)₄-^{∗} | CH₃-^{∗} | 1∼60 | - | CH₃-^{∗} |
| (I-I-72) | C₂H₅O-^{∗} | ^{∗}-(CH₂)₄-^{∗} | CH₃-^{∗} | 1∼60 | ^{∗}-Si(CH₃)₂-CH₂-^{∗} | CH₃-^{∗} |
| (I-I-73) | C₂H₅O-^{∗} | ^{∗}-(CH₂)₄-^{∗} | CH₃-^{∗} | 1∼60 | ^{∗}-Si(CH₃)₂-(CH₂)₂-^{∗} | CH₃-^{∗} |
| (I-I-74) | C₂H₅O-^{∗} | ^{∗}-(CH₂)₄-^{∗} | CH₃-^{∗} | 1~60 | ^{∗}-Si(CH₃)₂-(CH₂)₃-^{∗} | CH₃-^{∗} |
| (I-I-75) | C₂H₅O-^{∗} | ^{∗}-(CH₂)₄-^{∗} | CH₃-^{∗} | 1∼60 | ^{∗}-Si(CH₃)₂-(CH₂)₄-^{∗} | CH₃-^{∗} |

**[Table 5-2]**

| | A^{a10} | Z^{s10} | R^{s20} | n10 | Y^{s10} | R^{s10} |
|---|---|---|---|---|---|---|
| (I-I-76) | CH₃O-^{∗} | ^{∗}-O-^{∗} | CH₃-^{∗} | 1~60 | - | CH₃-^{∗} |
| (1-1-77) | CH₃O-^{∗} | ^{∗}-O-^{∗} | CH₃-^{∗} | 1~60 | ^{∗}-Si(CH₃)₂-CH₂-^{∗} | CH₃-^{∗} |
| (I-I-78) | CH₃O-^{∗} | ^{∗}-O-^{∗} | CH₃-^{∗} | 1~60 | ^{∗}-Si(CH₃)₂-(CH₂)₂-^{∗} | CH₃-* |
| (I-I-79) | CH₃O-^{∗} | ^{∗}-O-^{∗} | CH₃-^{∗} | 1~60 | ^{∗}-Si(CH₃)₂-(CH₂)₃-^{∗} | CH₃-^{∗} |
| (I-I-80) | CH₃O-^{∗} | ^{∗}-O-^{∗} | CH₃-^{∗} | 1~60 | ^{∗}-Si(CH₃)₂-(CH₂)₄-^{∗} | CH₃-^{∗} |
| (I-I-81) | CH₃O-^{∗} | ^{∗}-CH₂-^{∗} | CH₃-^{∗} | 1~60 | - | CH₃-^{∗} |
| (I-I-82) | CH₃O-^{∗} | ^{∗}-CH₂-^{∗} | CH₃-^{∗} | 1~60 | ^{∗}-Si(CH₃)₂-CH₂-^{∗} | CH₃-^{∗} |
| (1-1-83) | CH₃O-^{∗} | ^{∗}-CH₂-^{∗} | CH₃-^{∗} | 1~60 | ^{∗}-Si(CH₃)₂-(CH₂)₂-^{∗} | CH₃-^{∗} |
| (I-I-84) | CH₃O-^{∗} | ^{∗}-CH₂-^{∗} | CH₃-^{∗} | 1~60 | ^{∗}-Si(CH₃)₂-(CH₂)₃-^{∗} | CH₃-^{∗} |
| (I-I-85) | CH₃O-^{∗} | ^{∗}-CH₂-^{∗} | CH₃-^{∗} | 1~60 | ^{∗}-Si(CH₃)₂-(CH₂)₄-^{∗} | CH₃-^{∗} |
| (I-I-86) | CH₃O-^{∗} | ^{∗}-(CH₂)₂-^{∗} | CH₃-^{∗} | 1~60 | - | CH₃-^{∗} |
| (I-I-87) | CH₃O-^{∗} | ^{∗}-(CH₂)₂-^{∗} | CH₃-^{∗} | 1~60 | ^{∗}-Si(CH₃)₂-CH₂-^{∗} | CH₃-^{∗} |
| (I-I-88) | CH₃O-^{∗} | ^{∗}-(CH₂)₂-^{∗} | CH₃-^{∗} | 1~60 | ^{∗}-Si(CH₃)₂-(CH₂)₂-^{∗} | CH₃-^{∗} |
| (I-I-89) | CH₃O-^{∗} | ^{∗}-(CH₂)₂-^{∗} | CH₃-^{∗} | 1~60 | ^{∗}-Si(CH₃)₂-(CH₂)₃-^{∗} | CH₃-^{∗} |
| (I-I-90) | CH₃O-^{∗} | ^{∗}-(CH₂)₂-^{∗} | CH₃-^{∗} | 1~60 | ^{∗}-Si(CH₃)₂-(CH₂)₄-^{∗} | CH₃-^{∗} |
| (I-I-91) | CH₃O-^{∗} | ^{∗}-(CH₂)₃-^{∗} | CH₃-^{∗} | 1~60 | - | CH₃-^{∗} |
| (I-I-92) | CH₃O-^{∗} | ^{∗}-(CH₂)₃-^{∗} | CH₃-^{∗} | 1~60 | ^{∗}-Si(CH₃)₂-CH₂-^{∗} | CH₃-* |
| (I-I-93) | CH₃O-^{∗} | ^{∗}-(CH₂)₃-^{∗} | CH₃-^{∗} | 1~60 | ^{∗}-Si(CH₃)₂-(CH₂)₂-^{∗} | CH₃-^{∗} |
| (I-I-94) | CH₃O-^{∗} | ^{∗}-(CH₂)₃-^{∗} | CH₃-^{∗} | 1~60 | ^{∗}-Si(CH₃)₂-(CH₂)₃-^{∗} | CH₃-^{∗} |
| (I-I-95) | CH₃O-^{∗} | ^{∗}-(CH₂)₃-^{∗} | CH₃-^{∗} | 1~60 | ^{∗}-Si(CH₃)₂-(CH₂)₄-^{∗} | CH₃-^{∗} |
| (I-I-96) | CH₃O-^{∗} | ^{∗}-(CH₂)₄-^{∗} | CH₃-^{∗} | 1~60 | - | CH₃-^{∗} |
| (I-I-97) | CH₃O-^{∗} | ^{∗}-(CH₂)₄-^{∗} | CH₃-^{∗} | 1~60 | ^{∗}-Si(CH₃)₂-CH₂-^{∗} | CH₃-^{∗} |
| (I-I-98) | CH₃O-^{∗} | ^{∗}-(CH₂)₄-^{∗} | CH₃-^{∗} | 1~60 | ^{∗}-Si(CH₃)₂-(CH₂)₂-^{∗} | CH₃-^{∗} |
| (I-I-99) | CH₃O-^{∗} | ^{∗}-(CH₂)₄-^{∗} | CH₃-^{∗} | 1~60 | ^{∗}-Si(CH₃)₂-(CH₂)₃-^{∗} | CH₃-^{∗} |
| (1-1-100) | CH₃O-^{∗} | ^{∗}-(CH₂)₄-^{∗} | CH₃-^{∗} | 1~60 | ^{∗}-Si(CH₃)₂-(CH₂)₄-^{∗} | CH₃-^{∗} |

n10 shown in Tables 4-1, 4-2, 5-1 and 5-2 above is preferably an integer of 1 to 30.

A compound represented by formula (1-1-26) may be used as the compound represented by formula (I-I). The compound represented by formula (1-1-26) is represented by the following formula (a1-I).

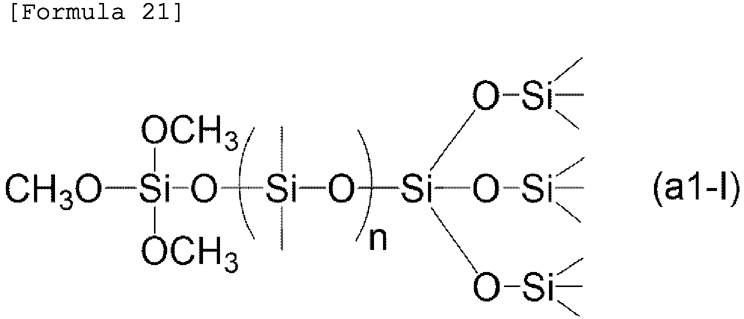

In formula (a1-I), n represents an integer of 1 to 60. n is more preferably an integer of 2 or more, still more preferably an integer of 3 or more, and more preferably an integer of 50 or less, still more preferably an integer of 45 or less, particularly preferably an integer of 30 or less, most preferably an integer of 25 or less.

Examples of the method for synthesizing the compound represented by formula (a1-1) include a method described in Japanese Patent Laid-Open No. 2017-201009.

As the compounds (A1) represented by formula (a1), "X-24-9011" manufactured by Shin-Etsu Chemical Co., Ltd., or the like can be used. "X-24-9011" manufactured by Shin-Etsu Chemical Co., Ltd. and represented by the following formula is a compound having a trimethoxysilyl group only at one end of one side and no hydroxy group and hydrolyzable group at the other end and containing a siloxane bond in the structure. The compound is represented by formula (a1) where r1 is 3, A^{a1} represents a methoxy group, and R^{a1} is a group of formula (a11-1), and the compound has a weight average molecular weight of 3400.

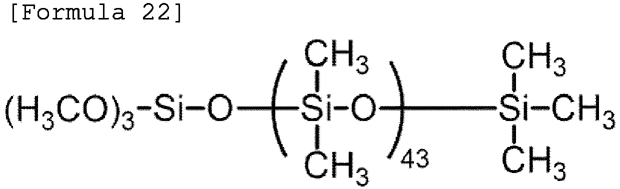

Examples of the compound (A1) represented by formula (a1) also include compounds represented by the following formula (a1-2), i.e. compounds in which R^{a1} in formula (a1) is a group represented by formula (a11-2) and z^{a1} in formula (a1) is a hydrocarbon group.

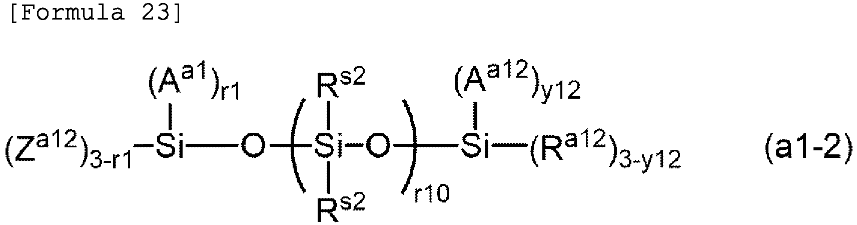

In formula (a1-2), A^{a1}, R^{s2}, A^{a12}, R^{a12}, r1, r10 and y12 have the same meanings as those described above, Z^{a12} represents a hydrocarbon group, a plurality of Z^{a12}s, when present, are optionally different from each other.

In formula (a1-2), A^{a1} and A^{a12} may be the same or different, and are preferably the same.

Examples of the hydrocarbon group represented by Z^{a12} include those similar to the groups described for Z^{a1} above, and the hydrocarbon group is preferably a methyl group or an ethyl group, with a methyl group being more preferable. Z^{a12} and R^{a12} may be the same or different, and are preferably the same.

r1 and y12 are each preferably 1 or 3. r1 and y12 may be the same or different, and are preferably the same.

As the compound represented by formula (a1-2), a compound is preferably used where R^{s2} is a methyl group, r10 represents an integer of 1 to 60, each of A^{a1} and A^{a12} is an alkoxy group having 1 or 2 carbon atoms, or a hydroxy group, each of Z^{a12} and R^{a12} is a methyl group or an ethyl group, and r1 and y12 are the same, and each represent an integer of 1 to 3.

Specific examples of the compound represented by formula (a1-2) include compounds represented by the following formula (I-II). In formula (I-II), combinations of A^{a00}, Z^{a0}, R^{s22}, n20, y0, A^{a0} and R^{a0} are preferably those shown in the table below.

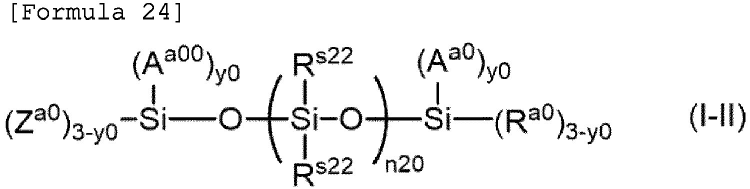

**[Table 6]**

| | A^{a00} | Z^{a0} | R^{s22} | n20 | y0 | A^{a0} | R^{a0} |
|---|---|---|---|---|---|---|---|
| (I-II-1) | C₂H₅O-^{∗} | CH₃-^{∗} | CH₃-^{∗} | 1∼60 | 1 | C₂H₅O-^{∗} | CH₃-^{∗} |
| (I-II-2) | CH₃O-^{∗} | CH₃-^{∗} | CH₃-^{∗} | 1∼60 | 1 | CH₃O-^{∗} | CH₃-^{∗} |
| (I-II-3) | HO-^{∗} | CH₃-^{∗} | CH₃-^{∗} | 1∼60 | 1 | HO-^{∗} | CH₃-^{∗} |
| (I-II-4) | C₂H₅O-^{∗} | C₂H₅-^{∗} | CH₃₋∗ | 1∼60 | 1 | C₂H₅O-^{∗} | C₂H₅-^{∗} |
| (I-II-5) | CH₃O-^{∗} | C₂H₅-^{∗} | CH₃₋∗ | 1∼60 | 1 | CH₃O-^{∗} | C₂H₅-^{∗} |
| (I-II-6) | HO-^{∗} | C₂H₅-^{∗} | CH₃₋∗ | 1∼60 | 1 | HO-^{∗} | C₂H₅-^{∗} |
| (I-II-7) | C₂H₅O-^{∗} | CH₃-^{∗} | CH₃₋∗ | 1∼60 | 2 | C₂H₅O-^{∗} | CH₃-^{∗} |
| (I-II-8) | CH₃O-^{∗} | CH₃-^{∗} | CH₃₋∗ | 1~60 | 2 | CH₃O-^{∗} | CH₃-^{∗} |
| (I-II-9) | HO-^{∗} | CH₃-^{∗} | CH₃₋∗ | 1~60 | 2 | HO-^{∗} | CH₃-^{∗} |
| (1-11-10) | C₂H₅O-^{∗} | C₂H₅-^{∗} | CH₃₋∗ | 1~60 | 2 | C₂H₅O-^{∗} | C₂H₅-^{∗} |
| (1-11-11) | CH₃O-^{∗} | C₂H₅-^{∗} | CH₃₋∗ | 1~60 | 2 | CH₃O-^{∗} | C₂H₅-^{∗} |
| (I-II-12) | HO-^{∗} | C₂H₅-^{∗} | CH₃₋∗ | 1~60 | 2 | HO-^{∗} | C₂H₅-^{∗} |
| (1-11-13) | C₂H₅O-^{∗} | - | CH₃₋∗ | 1~60 | 3 | C₂H₅O-^{∗} | - |
| (I-II-14) | CH₃O-^{∗} | - | CH₃₋∗ | 1~60 | 3 | CH₃O-^{∗} | - |
| (I-II-15) | HO-^{∗} | - | CH₃₋∗ | 1~60 | 3 | HO-^{∗} | - |

As the compound represented by formula (a1-2), compounds (1-11-1) to (I-II-3) and (1-11-13) to (1-11-15) are preferable, and the compound (1-11-3), the compound (1-11-13) or the compound (1-11-14) is more preferable.

As the compounds (A1) represented by formula (a1), "DMS-S12" manufactured by Gelest Inc., "KR-410" manufactured by Shin-Etsu Chemical Co., Ltd. or the like can also be used. "DMS-S12" manufactured by Gelest Inc. is a compound in which n20 is 4 to 7 in formula (1-11-3) shown in Table 6 above. "KR-410" manufactured by Shin-Etsu Chemical Co., Ltd. is a compound in which n20 is 10 in formula (1-11-14) shown in Table 6 above.

The compound (A1) represented by formula (a1) is preferably a compound represented by formula (a1-1) or a compound represented by formula (a1-2), more preferably a compound represented by formula (a1-1). The compounds (A1) may be used alone, or used in combination of two or more thereof.

When the total amount of the mixed composition is 100 mass%, the amount of the compound (A1) is preferably 0.01 mass% or more and 30 mass% or less. The amount of the compound (A1) is the total amount of a plurality of compounds (A1) when a plurality of compounds (A1) are used. The amount of the compound (A1) is more preferably 0.05 mass% or more, still more preferably 0.1 mass% or more, furthermore preferably 0.5 mass% or more, and more preferably 25 mass% or less, still more preferably 10 mass% or less, furthermore preferably 5 mass% or less.

### [Organosilicon compound (B)]

In the mixed composition of the present invention, an organosilicon compound (B) represented by the following formula (b1) is mixed. By mixing the organosilicon compound (B), the liquid-repellent property (water-repellent property in particular), in particular, the slip drop property of the liquid droplet in the film (slip drop property of water droplet in particular) is improved.

Si(R^{b1})_{b20}(X^{b1})_{4-b20} (b1)

In formula (b1), R^{b1} represents a hydrocarbon group having 1 to 5 carbon atoms, X^{b1} represents a hydrolyzable group, and b20 is 0 or 1. In formula (b1), b20 is preferably 0.

In formula (b1), the number of carbon atoms in the hydrocarbon group represented by R^{b1} is preferably 2 or more, and preferably 4 or less, more preferably 3 or less. In formula (b1), the hydrocarbon group represented by R^{b1} is preferably a saturated hydrocarbon group, more preferably a linear or branched alkyl group, still more preferably a linear alkyl group. The alkyl group is particularly preferably a methyl group, an ethyl group or a propyl group.

Examples of the hydrolyzable group represented by X^{b1} in formula (b1) include groups which give a hydroxy group (silanol group) when hydrolyzed, and alkoxy groups having 1 to 6 carbon atoms, a cyano group, an acetoxy group, a chlorine atom, an isocyanate group and the like are preferable. A plurality of X^{b1}s may be the same or different, and are preferably the same. X^{b1} is preferably an alkoxy group having 1 to 6 (more preferably 1 to 4) carbon atoms, or an isocyanate group, more preferably an alkoxy group having 1 to 6 (more preferably 1 to 4) carbon atoms, and it is still more preferable that all X^{b1}s be alkoxy groups having 1 to 6 (more preferably 1 to 4) carbon atoms.

The organosilicon compound (B) is preferably one in which b20 is 0, and X^{b1} is an alkoxy group having 1 to 6 (more preferably 1 to 4) carbon atoms. Specific examples of the organosilicon compound (B) include tetramethoxysilane, tetraethoxysilane (tetraethyl orthosilicate), tetrapropoxysilane, tetrabutoxysilane, methyltrimethoxysilane, methyltriethoxysilane, methyltripropoxysilane and methyltributoxysilane, and tetramethoxysilane and tetraethoxysilane are preferable. The organosilicon compounds (B) may be used alone, or used in combination of two or more thereof.

When the total amount of the mixed composition is 100 mass%, the amount of the organosilicon compound (B) is preferably 0.01 mass% or more and 25 mass% or less. The amount of the organosilicon compound (B) is the total amount of a plurality of organosilicon compounds (B) when a plurality of organosilicon compounds (B) are used. The amount of the organosilicon compound (B) is more preferably 0.05 mass% or more, still more preferably 0.08 mass% or more, furthermore preferably 0.1 mass% or more, and more preferably 20 mass% or less, still more preferably 5 mass% or less, furthermore preferably 2 mass% or less.

The molar ratio (B/A1) of the organosilicon compound (B) to the compound (A1) is preferably 0.1 or more and 1000 or less. The molar ratio (B/A1) is more preferably 0.3 or more, still more preferably 0.5 or more, furthermore preferably 1 or more, and more preferably 800 or less, still more preferably 250 or less, furthermore preferably 30 or less, furthermore preferably less than 10, particularly preferably 8 or less. When the molar ratio (B/A1) is in particular less than 10, the storage stability of the mixed composition can be further improved.

The mass ratio (A1/B) of the compound (A1) to the organosilicon compound (B) is preferably 0.001 or more and 40 or less. The mass ratio (A1/B) is more preferably 0.01 or more, still more preferably 0.1 or more, furthermore preferably 1 or more, and more preferably 30 or less, still more preferably 20 or less, furthermore preferably 10 or less.

### [Solvent (E)]

A solvent (E) is mixed in the mixed composition of the present invention, and the solvent (E) comprises a compound (E1) satisfying a Hansen solubility parameter of 18 to 23.5 (J/cm³)^{1/2} and a hydrogen bonding term (δH) of the Hansen solubility parameter, of 5.5 (J/cm³)^{1/2} or more.

The Hansen solubility parameter is obtained by dividing the solubility parameter introduced by Hildebrand, into three components of a dispersion term (δD), a polar term (δP), and a hydrogen bonding term (δH), and representing them in a three-dimensional space. The dispersion term (δD) indicates the effect due to the dispersion force, the polar term (δP) indicates the effect due to the dipole force, and the hydrogen bonding term (δH) indicates the effect due to the hydrogen bonding force. The definition and calculation of the Hansen solubility parameter are described in Hansen Solubility Parameters: A Users Handbook (CRC Press, 2007) edited by Charles M. Hansen. The Hansen solubility parameter of a compound whose literature value or the like is not known can also be simply estimated from the chemical structure of the compound by use of computer software Hansen Solubility Parameters in Practice (HSPiP). The Hansen solubility parameter of a compound whose literature value or the like is not known can also be calculated by using a solubility sphere method described below. When the respective Hansen solubility parameters of the compound (E1) and the solvent (E) are determined in the present invention, the respective Hansen solubility parameters of the compound (E1) and the solvent (E) may be adopted as they are with HSPiP version 5.2.05 in the case where the parameters are registered in the database, the respective Hansen solubility parameters of the compound (E1) and the solvent (E) may be values estimated from the chemical structures with HSPiP version 5.2.05 in the case where the parameters are not registered and the chemical structures are known, and the respective Hansen solubility parameters of the compound (E1) and the solvent (E) may be calculated by using a solubility sphere method described below in the case where the parameters are not registered and the chemical structures are not known.

The solubility sphere method is a method for calculating the Hansen solubility parameter of an objective substance (compound (E1) or solvent (E)), and can be made by a solubility test in which the objective substance is dissolved or dispersed in a number of different solvents having Hansen solubility parameters fixed and the dissolubility or dispersibility of the objective substance in a specified solvent is evaluated. The types of these solvents for use in the solubility test are preferably selected so that the total values of the dispersion terms, the polar terms and the hydrogen bonding terms of HSPs of these solvents are widely different between these solvents, and more specifically, evaluation is preferably made by using preferably 10 or more, more preferably 15 or more, still more preferably 17 or more solvents. Specifically, a sphere (solubility sphere): where, when the Hansen solubility parameter value of a solvent dissolving or dispersing the objective substance, among these solvents used in the solubility test, is plotted in a three-dimensional manner, all points about such a solvent, plotted in a three-dimensional manner, are included inside the sphere and points about a solvent not dissolving or dispersing are located outside the sphere, and the sphere has the minimum radius; is found out, and the central coordinate of the sphere is defined as the Hansen solubility parameter of the objective substance. For example, it is considered that, when the Hansen solubility parameter of another certain solvent not used in measurement of the Hansen solubility parameter of the objective substance corresponds to (δd, δp, δh), this solvent dissolves or disperses the objective substance if the point indicated by this coordinate is included inside the solubility sphere of the objective substance. On the other hand, it is considered that this solvent cannot dissolve or disperse the objective substance if this coordinate point is located outside the solubility sphere of the objective substance. The dissolubility and the dispersibility are respectively evaluated by visually determining whether or not the objective substance of interest is dissolved and dispersed in a solvent. A specific method of the solubility test is described in detail in the section of Examples.

By mixing the compound (E1), the compound (A1) and/or the organosilicon compound (B) in the mixed composition can be reduced in condensation and the storage stability of the mixed composition is thus improved, without being bound by any particular theory.

The Hansen solubility parameter of the compound (E1) is preferably 18.5 (J/cm³)^{1/2} or more, more preferably 19.0 (J/cm³)^{1/2} or more, and preferably 22.5 (J/cm³)^{1/2} or less, more preferably 21.5 (J/cm³)^{1/2} or less.

The hydrogen bonding term (δH) of the Hansen solubility parameter of the compound (E1) is preferably 6 (J/cm³)^{1/2} or more, more preferably 6.5 (J/cm³)^{1/2} or more. The upper limit of the hydrogen bonding term (δH) of the Hansen solubility parameter is, for example, preferably 20 (J/cm³)^{1/2} or less, more preferably 15 (J/cm³)^{1/2} or less, still more preferably 10 (J/cm³)^{1/2} or less.

Examples of the compound (E1) include methyl acetate [Hansen solubility parameter = 18.7 (J/cm³)^{1/2}, δH = 7.6 (J/cm³)^{1/2}], ethyl acetate [Hansen solubility parameter = 18.2 (J/cm³)^{1/2}, δH = 7.2 (J/cm³)^{1/2}], acetone [Hansen solubility parameter = 19.9 (J/cm³)^{1/2}, δH = 7.0 (J/cm³)^{1/2}], tetrahydrofuran [Hansen solubility parameter = 19.5 (J/cm³)^{1/2}, δH = 8.0 (J/cm³)^{1/2}], dichloromethane [Hansen solubility parameter = 19.8 (J/cm³)^{1/2}, δH = 7.1 (J/cm³)^{1/2}], diacetone alcohol [Hansen solubility parameter = 20.8 (J/cm³)^{1/2}, δH = 10.8 (J/cm³)^{1/2}], and 1,3-dioxolane [Hansen solubility parameter = 21.4 (J/cm³)^{1/2}, δH = 9.3 (J/cm³)^{1/2}], and among them, acetone is preferable. In the mixed composition, one, or two or more of the compounds (E1) may be mixed.

The ratio (δP/δH) of the polar term (δP) to the hydrogen bonding term (δH) of the Hansen solubility parameter of the compound (E1) preferably satisfies 0.70 or more and 1.70 or less. The ratio (δP/δH) is more preferably 0.8 or more, still more preferably 1 or more, furthermore preferably 1.1 or more, and more preferably 1.65 or less, still more preferably 1.6 or less, furthermore preferably 1.55 or less.

When the total amount of the solvent (E) is 100 mass%, the amount of the compound (E1) is preferably 5 mass% or more and 100 mass% or less. The amount of the compound (E1) is the total amount of a plurality of compounds (E1) when a plurality of compounds (E1) are used. The amount of the compound (E1) is more preferably 10 mass% or more, still more preferably 20 mass% or more, furthermore preferably 28 mass% or more, furthermore preferably 50 mass% or more, particularly preferably 80 mass% or more. The amount of the compound (E1) may be 100 mass%, namely, only the compound (E1) may be mixed as the solvent (E). The amount of the compound (E1) may be 98 mass% or less, or may be 96 mass% or less.

The solvent (E) may consist only of the compound (E1), or may be further mixed with an organic solvent (E2). The organic solvent (E2) is an organic solvent other than the compound (E1), namely, an organic solvent may be mixed which has a Hansen solubility parameter of less than 18 (J/cm³)^{1/2}, a Hansen solubility parameter of more than 23.5 (J/cm³)^{1/2}, or a hydrogen bonding term (δH) of the Hansen solubility parameter, of less than 5.5 (J/cm³)^{1/2}.

The organic solvent (E2) is more preferably a hydrophilic organic solvent such as an alcohol-based solvent (except for diacetone alcohol), an ether-based solvent (except for tetrahydrofuran and 1,3-dioxolane), a ketone-based solvent (except for acetone), an ester-based solvent (except for methyl acetate and ethyl acetate), or an amide-based solvent. These solvents may be used alone, or used in combination of two or more thereof.

When the total amount of the solvent (E) is 100 mass%, the amount of the organic solvent (E2) is preferably 95 mass% or less. The amount of the organic solvent (E2) is the total amount of a plurality of organic solvents (E2) when a plurality of organic solvents (E2) are used. The amount of the organic solvent (E2) is more preferably 90 mass% or less, still more preferably 80 mass% or less, furthermore preferably 72 mass% or less, furthermore preferably 50 mass% or less, particularly preferably 20 mass% or less. The amount of the organic solvent (E2) may be 0 mass%, may be 2 mass% or more, or may be 4 mass% or more.

Examples of the alcohol-based solvent include ethanol, 1-propanol, 2-propanol (isopropyl alcohol), butanol, ethylene glycol, propylene glycol and diethylene glycol. Examples of the ether-based solvent include dimethoxyethane and dioxane. Examples of the ketone-based solvent include methyl ethyl ketone and methyl isobutyl ketone. Examples of the ester-based solvent include butyl acetate. Examples of the amide-based solvent include dimethylformamide. In particular, the organic solvent (E2) is preferably an alcohol-based solvent, more preferably 2-propanol or ethanol.

2-Propanol is preferably mixed as the organic solvent (E2) in the mixed composition. By mixing 2-propanol, the compound (A1) and/or the organosilicon compound (B) in the mixed composition can be reduced in condensation speed and the storage stability of the mixed composition is thus improved, without being bound by any particular theory. In order that such effects are exerted, the amount of 2-propanol is preferably 2 mass% or more, more preferably 3 mass% or more, still more preferably 4 mass% or more when the total amount of the solvent (E) is 100 mass%. The amount of 2-propanol is preferably 30 mass% or less, more preferably 25 mass% or less, still more preferably 10 mass% or less when the total amount of the solvent (E) is 100 mass%. 2-Propanol is preferably used in production of a stock solution (referred to as "sample solution" in Examples described below).

The Hansen solubility parameter of the solvent (E) is, for example, preferably 18.0 (J/cm³)^{1/2} or more, more preferably 19.0 (J/cm³)^{1/2} or more, still more preferably 20.0 (J/cm³)^{1/2} or more, and preferably 26.0 (J/cm³)^{1/2} or less, more preferably 25.0 (J/cm³)^{1/2} or less, still more preferably 24.0 (J/cm³)^{1/2} or less.

The hydrogen bonding term (δH) of the Hansen solubility parameter of the solvent (E) is preferably 7.0 (J/cm³)^{1/2} or more, more preferably 7.5 (J/cm³)^{1/2} or more, still more preferably 7.6 (J/cm³)^{1/2} or more. The upper limit of the hydrogen bonding term (δH) of the Hansen solubility parameter of the solvent (E) is, for example, preferably 20 (J/cm³)^{1/2} or less, more preferably 19 (J/cm³)^{1/2} or less, still more preferably 17 (J/cm³)^{1/2} or less.

The ratio (δP/δH) of the polar term (δP) to the hydrogen bonding term (δH) of the Hansen solubility parameter of the solvent (E) preferably satisfies 0.40 or more and 1.70 or less. The ratio (δP/δH) is more preferably 0.50 or more, still more preferably 0.57 or more, and more preferably 1.55 or less, still more preferably 1.40 or less.

The Hansen solubility parameter of the solvent (E) in the present invention means the value of the Hansen solubility parameter of the compound (E1) in the case of the solvent (E) consisting only of the compound (E1), or means the value of the Hansen solubility parameter of a mixed solvent of the compound (E1) and the organic solvent (E2) mixed in the mixed composition in the case of the solvent (E) consisting of the compound (E1) and the organic solvent (E2). When a plurality of compounds (E1) are used, the δD1 total, the δP1 total and the δH1 total of the entire compounds (E1) can be determined from δD1, δP1, and δH1 of each of the compounds (E1), and the volume fraction of each of the compounds (E1) based on the total volume of the entire compounds (E1) and the entire organic solvent (E2). The δD1 total can be determined based on the following expression.

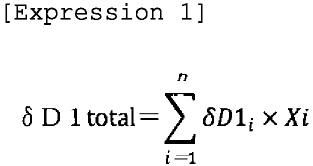

In the above expression, when a plurality of compounds (E1) are used, δD1ᵢ represents the value of δD1 of each of the compounds (E1), n represents the number of types of the compounds (E1), and Xᵢ represents the volume fraction of each of the compounds (E1) relative to the total volume of the entire compounds (E1) and the entire organic solvent (E2). The δP1 total and the δH1 total can also be determined in the same manner. Also when a plurality of organic solvents (E2) are used, the δD2 total, the δP2 total, and the δH2 total of the entire organic solvents (E2) can be determined in the same manner. The sum of the δD1 total and the δD2 total, the sum of the δP1 total and the δP2 total, and the sum of the δH1 total and the δH2 total are respectively δD, δP, and δH of the solvent (E), and the value of the Hansen solubility parameter (HSP) of the solvent (E) can be determined based on these values.

When the total amount of the mixed composition is 100 mass%, the amount of the solvent (E) is preferably 60 to 98.5 mass%. The amount of the solvent (E) is more preferably 65 mass% or more, still more preferably 90 mass% or more, particularly preferably 95 mass% or more, and more preferably 98.3 mass% or less, still more preferably 98.2 mass% or less.

The mass ratio (E/A1) of the solvent (E) to the compound (A1) is preferably 50 to 120. The mass ratio (E/A1) is more preferably 55 or more, still more preferably 60 or more, and more preferably 110 or less, still more preferably 90 or less, particularly preferably 85 or less, most preferably 80 or less.

### [Organosilicon compound (C)]

An organosilicon compound (C) represented by the following formula (c1) is preferably mixed in the mixed composition of the present invention. By mixing the organosilicon compound (C), reaction between the compound (A1) and the organosilicon compound (B) can be accelerated, so that the film formation time can be reduced.

R^{c1}-Si(X^{c1})₃ (c1)

In formula (c1), R^{c1} represents a hydrocarbon group having 6 to 30 carbon atoms, and X^{c1} represents a hydrolyzable group.

In formula (c1), the number of carbon atoms in the hydrocarbon group represented by R^{c1} is preferably 7 or more, more preferably 8 or more, still more preferably 10 or more, and preferably 20 or less, more preferably 18 or less, still more preferably 12 or less.

In formula (c1), the hydrocarbon group represented by R^{c1} is preferably a saturated hydrocarbon group, more preferably a linear or branched alkyl group, still more preferably a linear alkyl group. As alkyl groups, a hexyl group, a heptyl group, an octyl group, a nonyl group, a decyl group, an undecyl group, a dodecyl group, a tetradecyl group, a hexadecyl group and an octadecyl group are preferable, an octyl group, a decyl group, a dodecyl group, a tetradecyl group, a hexadecyl group and an octadecyl group are more preferable, and an octyl group, a decyl group and a dodecyl group are still more preferable.

Examples of the hydrolyzable group represented by X^{c1} in formula (c1) include groups which give a hydroxy group (silanol group) when hydrolyzed, and alkoxy groups having 1 to 6 carbon atoms, a cyano group, an acetoxy group, a chlorine atom, an isocyanate group and the like are preferable. Three X^{c1}s may be the same or different, and are preferably the same. X^{c1} is preferably an alkoxy group having 1 to 6 (more preferably 1 to 4, still more preferably 1 or 2) carbon atoms, or a cyano group, more preferably an alkoxy group having 1 to 6 (more preferably 1 to 4, still more preferably 1 or 2) carbon atoms, and it is still more preferable that all X^{c1}s be alkoxy groups having 1 to 6 (more preferably 1 to 4, still more preferably 1 or 2) carbon atoms.

The organosilicon compound (C) is preferably one in which R^{c1} is a linear alkyl group having 6 to 18 (more preferably 8 to 18, still more preferably 8 to 12) carbon atoms, and all X^{c1}s are the same, and are alkoxy groups having 1 to 6 (more preferably 1 to 4, still more preferably 1 or 2) carbon atoms. Specific examples of the organosilicon compound (C) include hexyltrimethoxysilane, hexyltriethoxysilane, heptyltrimethoxysilane, heptyltriethoxysilane, octyltrimethoxysilane, octyltriethoxysilane, nonyltrimethoxysilane, nonyltriethoxysilane, decyltrimethoxysilane, decyltriethoxysilane, undecyltrimethoxysilane, undecyltriethoxysilane, dodecyltrimethoxysilane, dodecyltriethoxysilane, tridecyltrimethoxysilane, tridecyltriethoxysilane, tetradecyltrimethoxysilane, tetradecyltriethoxysilane, pentadecyltrimethoxysilane, pentadecyltriethoxysilane, hexadecyltrimethoxysilane, hexadecyltriethoxysilane, heptadecyltrimethoxysilane, heptadecyltriethoxysilane, octadecyltrimethoxysilane and octadecyltriethoxysilane. Among them, octyltrimethoxysilane, octyltriethoxysilane, decyltrimethoxysilane, decyltriethoxysilane, dodecyltrimethoxysilane, dodecyltriethoxysilane, tetradecyltrimethoxysilane, tetradecyltriethoxysilane, hexadecyltrimethoxysilane, hexadecyltriethoxysilane, octadecyltrimethoxysilane and octadecyltriethoxysilane are preferable, and octyltrimethoxysilane, octyltriethoxysilane, decyltrimethoxysilane, decyltriethoxysilane, dodecyltrimethoxysilane and dodecyltriethoxysilane are more preferable. The organosilicon compounds (C) may be used alone, or used in combination of two or more thereof.

When the total amount of the mixed composition is 100 mass%, the amount of the organosilicon compound (C) is preferably 0.001 mass% or more and 3 mass% or less. The amount of the organosilicon compound (C) is the total amount of a plurality of organosilicon compounds (C) when a plurality of organosilicon compounds (C) are used. The amount of the organosilicon compound (C) is more preferably 0.005 mass% or more, still more preferably 0.01 mass% or more, furthermore preferably 0.03 mass% or more, and more preferably 2 mass% or less, still more preferably 1 mass% or less, furthermore preferably 0.5 mass% or less.

The molar ratio (A1/C) of the compound (A1) to the organosilicon compound (C) is preferably 0.001 or more and 5 or less. The molar ratio (A1/C) is more preferably 0.005 or more, still more preferably 0.01 or more, furthermore preferably 0.1 or more, and more preferably 4 or less, still more preferably 3 or less, furthermore preferably 2.5 or less.

The mass ratio (A1/C) of the compound (A1) to the organosilicon compound (C) is preferably 0.2 or more and 30 or less. The mass ratio (A1/C) is more preferably 1 or more, still more preferably 10 or more, and more preferably 29 or less, still more preferably 28 or less.

The molar ratio (B/C) of the organosilicon compound (B) to the organosilicon compound (C) is preferably 0.01 or more and 48 or less. The molar ratio (B/C) is more preferably 0.1 or more, still more preferably 0.5 or more, furthermore preferably 1 or more, and more preferably 40 or less, still more preferably 25 or less, furthermore preferably 10 or less.

The mass ratio [A1/(B+C)] of the compound (A1) to the total amount of the organosilicon compound (B) and the organosilicon compound (C) is preferably 0.060 or more. When the mass ratio [A1/(B+C)] is 0.060 or more, liquid-repellent property (water-repellent property in particular), in particular, the slip drop property of the liquid droplet in the film (slip drop property of water droplet in particular) is improved. The mass ratio [A1/(B+C)] is more preferably 0.1 or more, still more preferably 1 or more, furthermore preferably 2 or more. The upper limit of the mass ratio [A1/(B+C)] is, for example, 100 or less, more preferably 50 or less, still more preferably 30 or less, particularly preferably 10 or less.

When the total amount of the mixed composition is 100 mass%, the total amount (A1 + B + C) of the compound (A1), the organosilicon compound (B), and the organosilicon compound (C) is 0.1 mass% or more and 30 mass% or less. The total amount (A1 + B + C) is more preferably 0.5 mass% or more, still more preferably 1 mass% or more, furthermore preferably 1.3 mass% or more, and more preferably 15 mass% or less, still more preferably 10 mass% or less, furthermore preferably 5 mass% or less.

The mass ratio [E/(A1 + B + C)] of the amount of the solvent (E) to the total amount of the compound (A1), the organosilicon compound (B), and the organosilicon compound (C) is preferably 40 or more and 90 or less. The mass ratio [E/(A1 + B + C)] is more preferably 43 or more, still more preferably 45 or more, and more preferably 70 or less, still more preferably 68 or less, particularly preferably 65 or less.

In the mixed composition of the present invention, water (D) may be mixed. When the total amount of the mixed composition is 100 mass%, the amount of the water (D) is preferably less than 20 mass%. The amount of the water (D) is more preferably 19 mass% or less, still more preferably 10 mass% or less, furthermore preferably 5 mass% or less, furthermore preferably 1 mass% or less. The amount of the water (D) may be, for example, 0.001 mass% or more, and is preferably 0.01 mass% or more, more preferably 0.02 mass% or more.

The mass ratio (D/A1) of the amount of the water (D) to the compound (A1) is preferably 0.01 or more and 10 or less. The mass ratio (D/A1) is more preferably 0.015 or more, still more preferably 0.02 or more, and more preferably 5 or less, still more preferably 1 or less, furthermore preferably 0.5 or less, furthermore preferably 0.1 or less.

The mass ratio [D/(A1+B+C)] of the amount of the water (D) to the total amount of the compound (A1), the organosilicon compound (B) and the organosilicon compound (C) is preferably 0.01 or more and 3 or less. The mass ratio [D/(A1+B+C)] is more preferably 0.013 or more, still more preferably 0.015 or more, and more preferably 2 or less, still more preferably 1 or less.

It is preferable that in the mixed composition of the present invention, a catalyst (F) and/or a weak acid (G) having an acid dissociation constant pKa of 1 or more and 5 or less be mixed in addition to the above-described components.

### [Catalyst (F)]

As the catalyst (F), inorganic acids such as hydrogen chloride (normally used in the form of hydrochloric acid), phosphoric acid and nitric acid; carboxylic acid compounds (organic acids) such as maleic acid, malonic acid, formic acid, benzoic acid, phenylethanoic acid, butanoic acid, 2-methylpropanoic acid, propanoic acid, 2,2-dimethylpropanoic acid and acetic acid; basic compounds such as ammonia and amine; organometallic compounds such as aluminum ethylacetoacetate compounds; and the like can be used. As the catalyst (F), acidic compounds such as inorganic acids and organic acids are preferably used, inorganic acids are more preferable, and hydrogen chloride (hydrochloric acid) is still more preferable. The catalysts (F) may be used alone, or used in combination of two or more thereof.

When the total amount of the mixed composition is 100 mass%, the amount of the catalyst (F) is preferably 0.000001 mass% or more and 0.0015 mass% or less. The amount of the catalyst (F) is the total amount of a plurality of catalysts (F) when a plurality of catalysts (F) are used. The amount of the catalyst (F) is more preferably 0.000005 mass% or more, still more preferably 0.00001 mass% or more, and more preferably 0.001 mass% or less, still more preferably 0.0001 mass% or less.

The mass ratio (F/A1) of the amount of the catalyst (F) to the compound (A1) is preferably 0.000005 or more and 0.003 or less. The mass ratio (F/A1) is more preferably 0.000006 or more, still more preferably 0.000007 or more, and more preferably 0.001 or less, still more preferably 0.0001 or less.

The mass ratio [F/(A1+B+C)] of the amount of the catalyst (F) to the total amount of the compound (A1), the organosilicon compound (B) and the organosilicon compound (C) is preferably 0.000003 or more and 0.003 or less. The mass ratio [F/(A1+B+C)] is more preferably 0.000004 or more, still more preferably 0.000005 or more, and more preferably 0.001 or less, still more preferably 0.0001 or less.

### [Weak acid (G) having pKa of 1 or more and 5 or less]

When a catalyst other than a phosphoric acid or carboxylic acid compound is used as the catalyst (F), it is preferable that in the mixed composition of the present invention, the weak acid (G) having a pKa of 1 or more and 5 or less be mixed. This enables suppression of impairment of storage stability due to gelation of the mixed composition. The pKa of the weak acid (G) is preferably 4.3 or less, more preferably 4.0 or less, still more preferably 3.5 or less. The pKa of the weak acid (G) is, for example, 1 or more. When the weak acid (G) has a plurality of pKas, whether or not the range of pKa is satisfied is determined on the basis of the smallest pKa.

The weak acid (G) may be either an inorganic acid or an organic acid, and examples thereof include carboxylic acid compounds and phosphoric acid compounds. The weak acids (G) mixed may be used alone, or used in combination of two or more thereof.

The carboxylic acid compound means a compound having at least one carboxy group, may be either a monovalent carboxylic acid compound or a polyvalent carboxylic acid compound (carboxylic acid compound having two or more carboxy groups), and is preferably a polyvalent carboxylic acid compound. The polyvalent carboxylic acid compound is more preferably oxalic acid with two carboxy groups directly bonded to each other, or a polyvalent carboxylic acid compound in which a carboxy group is bonded to each of both ends of a divalent hydrocarbon group and the main chain (longest linear chain) of the hydrocarbon group has 1 to 15 carbon atoms (more preferably 1 to 5, still more preferably 1 to 4, furthermore preferably 1 to 3, particularly preferably 1 or 2 carbon atoms) (particularly dicarboxylic acid, tricarboxylic acid or tetracarboxylic acid). The divalent hydrocarbon group may be linear or branched, may be an aliphatic hydrocarbon group or an aromatic hydrocarbon group, and may be a saturated hydrocarbon group or an unsaturated hydrocarbon group, and hydroxy groups or carboxy groups may be bonded to carbon atoms other than those at both ends of the hydrocarbon group.

Examples of the carboxylic acid compound include dicarboxylic acids such as oxalic acid (pKa = 1.27), malonic acid (pKa = 2.60), succinic acid (pKa = 3.99), maleic acid (pKa = 1.84), fumaric acid (pKa = 3.02), glutaric acid (pKa = 4.13), adipic acid (pKa = 4.26), pimelic acid (pKa = 4.71), tartaric acid (pKa = 2.98), malic acid (pKa = 3.23), phthalic acid (pKa = 2.89), itaconic acid (pKa = 3.85), muconic acid (pKa = 3.87), 1,4-cyclohexanedicarboxylic acid (pKa = 4.51), 1,4-naphthalenedicarboxylic acid, 2,6-naphthalenedicarboxylic acid (pKa = 3.69), 2,7-naphthalenedicarboxylic acid (pKa = 3.72) and 4,4'-biphenyldicarboxylic acid (pKa = 3.77); tricarboxylic acids such as citric acid (pKa = 2.90), aconitic acid (pKa = 2.8), trimellitic acid (pKa = 2.52), trimesic acid, biphenyl-3,4',5-tricarboxylic acid (pKa = 3.36) and tricarballylic acid (pKa = 3.49); and tetracarboxylic acid such as butanetetracarboxylic acid (pKa = 3.25). The carboxylic acid compound is more preferably oxalic acid, dicarboxylic acid with a carboxy group bonded to each of both ends of a saturated or unsaturated linear hydrocarbon group having 1 to 3 carbon atoms(particularly 1 or 2 carbon atoms), or tricarboxylic acid. Specifically, the carboxylic acid compound is preferably oxalic acid, malonic acid, succinic acid, maleic acid, glutaric acid, tricarballylic acid or the like, more preferably oxalic acid, malonic acid, succinic acid, maleic acid or tricarballylic acid.

The carboxylic acid compound may be a polymer having at least one carboxy group in the molecule. Examples of the polymer include polymers containing a structural unit having a carboxy group on a side chain, and the polymer may contain two or more structural units having a carboxy group on a side chain. Examples of the polymer having at least carboxy group in the molecule include (meth)acrylic polymers having a carboxy group, polyester polymers having a carboxy group, and polyolefin polymers having a carboxy group.

The molecular weight of the carboxylic acid compound is preferably 1000 or less, more preferably 500 or less. The molecular weight is preferably 50 or more, more preferably 80 or more, still more preferably 90 or more.

The carboxylic acid compound is preferably a compound represented by the following formula (g1).

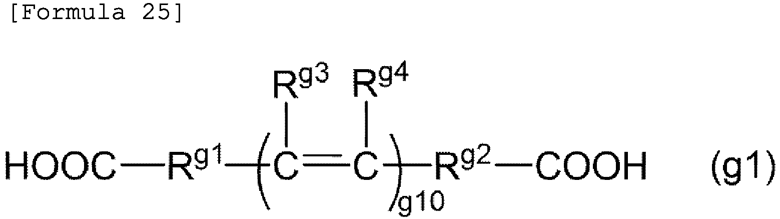

In formula (g1), R^{g1} and R^{g2} each independently represent a divalent aliphatic hydrocarbon group having 1 to 10 carbon atoms and optionally having a carboxy group and/or a hydroxy group, a divalent aromatic hydrocarbon group having 6 to 10 carbon atoms and optionally having a carboxy group, or a single bond. R^{g3} and R^{g4} each independently represent an alkyl group having 1 to 10 carbon atoms and optionally having a carboxy group, a carboxy group, or a hydrogen atom. g10 is 0 or 1.

The divalent aliphatic hydrocarbon group having 1 to 10 carbon atoms and represented by R^{g1} and R^{g2} may be linear, branched or cyclic. Specific examples thereof include alkanediyl groups such as a methylene group, an ethylene group, a propylene group and a butylene group. Examples of the divalent aromatic hydrocarbon group having 6 to 10 carbon atoms and represented by R^{g1} and R^{g2} include a phenylene group. The divalent aliphatic hydrocarbon groups represented by R^{g1} and R^{g2} optionally have a carboxy group and/or a hydroxy group, and the divalent aromatic hydrocarbon group optionally has a carboxy group. R^{g1} is preferably a single bond, or a divalent aliphatic hydrocarbon group having 1 to 10 carbon atoms and optionally having a carboxy group, and R^{g1} is more preferably a single bond, or a divalent linear aliphatic hydrocarbon group having 1 to 10 carbon atoms and optionally having a carboxy group. R^{g2} is preferably a single bond.

The alkyl groups having 1 to 10 carbon atoms and represented by R^{g3} and R^{g4} may be linear, branched or cyclic, and specific examples thereof include a methyl group, an ethyl group, a propyl group and a butyl group. R^{g3} is preferably a hydrogen atom. R^{g4} is preferably a hydrogen atom.

The compound represented by formula (g1) is preferably a compound represented by the following formula (g2). In the following formula (g2), preferably, g20 is an integer of 0 to 2 and g20 is 1.

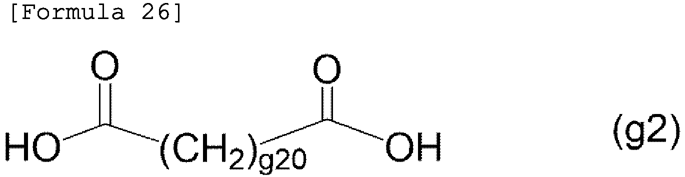

The carboxylic acid compounds mixed may be used alone, or used in combination of two or more thereof.

Examples of the phosphoric acid compound include orthophosphoric acid (pKa = 1.83); and polyphosphoric acids such as pyrophosphoric acid (pKa = 1.57), tripolyphosphoric acid (pKa = 0.71), tetrapolyphosphoric acid (pKa = 0.33), trimetaphosphoric acid, tetraphosphorus decaoxide and metaphosphoric acid. Among them, orthophosphoric acid is preferable. The phosphoric acid compounds may be used alone, or used in combination of two or more thereof.

When the total amount of the mixed composition is 100 mass%, the amount of the weak acid (G) is preferably 0.001 mass% or more and 3 mass% or less. The amount of the weak acid (G) is the total amount of a plurality of weak acids (G) when a plurality of weak acids (G) are used. The amount of the weak acid (G) is more preferably 0.005 mass% or more, still more preferably 0.01 mass% or more, particularly preferably 0.05 mass% or more, and more preferably 2 mass% or less, still more preferably 1 mass% or less, furthermore preferably 0.5 mass% or less.

The mass ratio (G/A1) of the amount of the weak acid (G) to the compound (A1) is preferably 0.001 or more and 1.5 or less. The mass ratio (G/A1) is more preferably 0.005 or more, still more preferably 0.01 or more, and more preferably 1 or less, still more preferably 0.5 or less.

The mass ratio [G/(A1+B+C)] of the amount of the weak acid (G) to the total amount of the compound (A1), the organosilicon compound (B) and the organosilicon compound (C) is preferably 0.001 or more and 2 or less. The mass ratio [G/(A1+B+C)] is more preferably 0.01 or more, still more preferably 0.05 or more, and more preferably 1 or less, still more preferably 0.5 or less.

The solid content concentration of the mixed composition of the present invention is preferably 0.1 to 3 mass% when the total amount is 100 mass%. The solid content concentration is more preferably 0.5 mass% or more, still more preferably 1 mass% or more, and more preferably 2.5 mass% or less, still more preferably 2 mass% or less.

In the mixed composition of the present invention, other components such as various additives such as oxidation inhibitors, antirust agents, ultraviolet absorbers, light stabilizers, fungicides, antibacterial agents, biofouling inhibitors, deodorants, pigments, flame retardants and antistatic agents may be mixed in the range not inhibiting the effects of the present invention.

The mixed composition of the present invention is capable of forming a film excellent in liquid-repellent property (water-repellent property in particular), in particular, slip drop property of the liquid droplet (slip drop property of water droplet in particular).

The mixed composition of the present invention can be produced by, for example, mixing the above-described components at room temperature.

The method for imparting a liquid-repellent property (slip drop property of liquid droplet in particular) to a base material using the mixed composition of the present invention is preferably a method in which a film is formed on a surface of a base material using the mixed composition of the present invention. As the method for forming a film on a surface of a base material using the mixed composition of the present invention, a method can be adopted in which the mixed composition of the present invention is brought into contact with a base material, and left to stand in air in this state.

Examples of the method for bringing the mixed composition of the present invention into contact with a base material include hand-coating (a method in which a cloth or the like is impregnated with the mixed composition and the mixed composition is rubbed against a base material, where, upon rubbing, it is preferable to move the cloth back and forth multiple times on the base material), a spin coating method, a dip coating method, pouring (a method in which the mixed composition is directly dropped to a base material with a dropper or the like to perform coating), spraying (a base material is coated with the mixed composition using a spray), and combinations of these methods.

By leaving the mixed composition of the present invention to stand in air at normal temperature in a state of contact with the base material, the mixed composition can be cured to form a film on the base material.

The standing time is not particularly limited, and is preferably 10 minutes or more and 24 hours or less, for example. The standing time is preferably 30 minutes or more, and preferably 12 hours or less, more preferably 8 hours or less, still more preferably 5 hours or less, particularly preferably 3 hours or less. It is also preferable to further dry the obtained film by blowing air, for example. When the organosilicon compound (C) is mixed in the mixed composition, reaction between the compound (A1) and the organosilicon compound (B) is accelerated, so that it is possible to form a film in a further short time.

The thickness of the film is preferably 1 nm or more, more preferably 1.5 nm or more, and the upper limit thereof may be, for example, 50 nm or less, 20 nm or less. It is preferable that the thickness of the film be above a certain level because exhibition of good liquid-repellent property (water-repellent property in particular), in particular, the slip drop property of the liquid droplet in the film (slip drop property of water droplet in particular) with stability can be expected.

The material of the base material for contact of the mixed composition of the present invention may be an organic material or an inorganic material. Examples of the organic material include thermoplastic resins such as acrylic resin, polycarbonate resin, polyester resin, styrene resin, acryl-styrene copolymer resin, cellulose resin and polyolefin resin; and thermosetting resins such as phenol resin, urea resin, melamine resin, epoxy resin, unsaturated polyester, silicone resin and urethane resin. Examples of the inorganic material include ceramics; glass; metals such as iron, silicon, copper, zinc and aluminum; and alloys including any of the above-described metals, and glass is preferable.

The shape of the base material for contact of the mixed composition of the present invention is not particularly limited, and may be a planar surface shape or a curved surface shape, or the base material may have a three-dimensional structure in which many surfaces are combined.

The base material for contact of the mixed composition of the present invention may be subjected to treatment for easy bonding in advance. Examples of the treatment for easy bonding include hydrophilization treatments such as corona treatment, plasma treatment and ultraviolet treatment. Primer treatment may be performed with resin, a silane coupling agent, a tetraalkoxysilane or the like, or a glass film of polysilazane or the like may be applied to a base material in advance.

The film obtained using the mixed composition of the present invention is excellent in liquid-repellent property (water-repellent property in particular). The liquid-repellent property of the film, in particular, the slip drop property of the water droplet with respect to the film can be evaluated on the basis of the result of a spraying test described in Examples. In the present invention, the film is evaluated as being excellent in slip drop property of the water droplet when the average of the numbers of times of spraying in the spraying test is less than 4.0, and the film is evaluated as being particularly excellent in slip drop property of the water droplet when the average of the numbers of times of spraying is less than 2.0.

The results of evaluations of the slip drop property of the water droplet with respect to the film, evaluated by a spraying test described below, are associated with the results of evaluations of the contact angle and the slip drop angle of water with respect to a surface of the film, as common evaluation methods, and these have the same trends. The contact angle of water with respect to a surface of the film is preferably 100° or more, more preferably 103° or more, still more preferably 105° or more. The upper limit of the contact angle of water with respect to a surface of the film is not particularly limited, and is, for example, 120° or less. The slip drop angle of water with respect to a surface of the film is preferably 20° or less, more preferably 18° or less, still more preferably 17° or less, furthermore preferably 16° or less. The lower limit of the slip drop angle of water with respect to a surface of the film is not particularly limited, and is, for example, 2° or more. The method for measuring the contact angle and the slip drop angle of water with respect to a surface of the film will be described in Examples.

By using the mixed composition of the present invention, a film excellent in liquid-repellent property (water-repellent property in particular), in particular, slip drop property of the liquid droplet (slip drop property of water droplet in particular) can be provided. The mixed composition of the present invention is excellent in storage stability, and thus, even when the mixed composition stored for a long period of time is used, a film excellent in liquid-repellent property (water-repellent property in particular), in particular, slip drop property of the liquid droplet can be provided.

The film obtained using the mixed composition of the present invention is useful for building materials, automobile parts and plant equipment, for example. By applying the mixed composition of the present invention to glass to form a film, the liquid-repellent property (water-repellent property in particular) of the glass, in particular, the slip drop property of the liquid droplet (slip drop property of water droplet in particular) can be improved, and the present invention also includes glass having a film on at least one surface thereof. Specifically, by applying the mixed composition of the present invention to glass for various vehicles and windowpanes of buildings, the liquid-repellent property (water-repellent property in particular) and, in particular, the slip drop property of the liquid droplet (slip drop property of water droplet in particular) can be improved, and a film obtained from the mixed composition of the present invention may be present on at least one surface of the glass. In particular, when a film is formed on a surface of glass for various vehicles using the mixed composition of the present invention, the liquid droplet is unlikely to adhere to a surface of glass, so that the antifouling property can be imparted, resulting in good visibility.

### Examples

Hereinafter, the present invention will be described in detail by way of Examples. The present invention is not limited by Examples below, and can be carried out while changes are appropriately made as long as the spirits described above and later can be met, and all of these changes are encompassed in the technical scope of the present invention.

### (Example 1)

177 µl of "X-24-9011" manufactured by Shin-Etsu Chemical Co., Ltd. as the compound (A1), 45 µl of tetraethyl orthosilicate (tetraethoxysilane) as the organosilicon compound (B) and 7 µl of n-decyltrimethoxysilane as the organosilicon compound (C) were dissolved in 40 µl of isopropyl alcohol (2-propanol), and the solution was stirred at room temperature for 10 minutes. To the obtained solution was added dropwise 4 µl of 0.01 M hydrochloric acid, and the mixture was stirred at room temperature for 3 hours. To the obtained solution were added 276 µl of a solution of malonic acid diluted by 10 times in terms of mass ratio with isopropyl alcohol, and 450 µl of isopropyl alcohol (2-propanol) to prepare a sample solution 1. The obtained sample solution 1 (999 µl) and 14 ml of acetone were mixed to prepare a coating solution 1.

### (Example 2)

The sample solution 1 (999 µl) prepared by the method described in Example 1 and 14 ml of ethyl acetate were mixed to prepare a coating solution 2.

### (Example 3)

The sample solution 1 (999 µl) prepared by the method described in Example 1, 9.5 ml of ethanol and 4.5 ml of acetone were mixed to prepare a coating solution 3.

### (Example 4)

The sample solution 1 (999 µl) prepared by the method described in Example 1, 12.5 ml of ethanol and 1.5 ml of acetone were mixed to prepare a coating solution 4.

### (Example 5)

The sample solution 1 (999 µl) prepared by the method described in Example 1, 2.75 ml of isopropyl alcohol (2-propanol), 7.5 ml of ethanol and 3.750 ml of acetone were mixed to prepare a coating solution 5.

### (Example 6)

The sample solution 1 (999 µl) prepared by the method described in Example 1, 2.750 ml of ethyl acetate and 11.250 ml of acetone were mixed to prepare a coating solution 6.

### (Example 7)

The sample solution 1 (999 µl) prepared by the method described in Example 1 and 14 ml of tetrahydrofuran were mixed to prepare a coating solution 7.

### (Example 8)

The sample solution 1 (999 µl) prepared by the method described in Example 1 and 14 ml of dichloromethane were mixed to prepare a coating solution 8.

### (Example 9)

The sample solution 1 (999 µl) prepared by the method described in Example 1 and 14 ml of methyl acetate were mixed to prepare a coating solution 9.

### (Example 10)

The sample solution 1 (999 µl) prepared by the method described in Example 1 and 14 ml of diacetone alcohol were mixed to prepare a coating solution 10.

### (Example 11)

The sample solution 1 (999 µl) prepared by the method described in Example 1 and 14 ml of 1,3-dioxolane were mixed to prepare a coating solution 11.

### (Example 12)

177 µl of "X-24-9011" manufactured by Shin-Etsu Chemical Co., Ltd. as the compound (A1), 45 µl of tetraethyl orthosilicate (tetraethoxysilane) as the organosilicon compound (B) and 7 µl of decyltrimethoxysilane as the organosilicon compound (C) were dissolved in 40 µl of acetone, and the solution was stirred at room temperature for 10 minutes. To the obtained solution was added dropwise 4 µl of 0.01 M hydrochloric acid, and the mixture was stirred at room temperature for 3 hours. To the obtained solution were added dropwise 273 µl of a solution of malonic acid diluted by 10 times in terms of mass ratio with acetone, and 453 µl of acetone to prepare a sample solution 2. The obtained sample solution 2 (999 µl) and 14 ml of acetone were mixed to prepare a coating solution 12.

### (Comparative Example 1)

The sample solution 1 (999 µl) prepared by the method described in Example 1 and 14 ml of ethanol were mixed to prepare a coating solution 13.

### (Comparative Example 2)

The sample solution 1 (999 µl) prepared by the method described in Example 1 and 14 ml of butyl acetate were mixed to prepare a coating solution 14.

### (Comparative Example 3)

The sample solution 1 (999 µl) prepared by the method described in Example 1 and 14 ml of methyl ethyl ketone were mixed to prepare a coating solution 15.

Tables 7-1 to 7-3 show the component compositions (mass%) of the coating solutions. The amount of each component is a value when the total amount of the coating solution is 100 mass%. The amount of the water (D) shown in Tables 7-1 to 7-3 is a value including the amount of water in the catalyst (F). In addition, Tables 7-1 to 7-3 show the molar ratios and the mass ratios of components which are calculated on the basis of the amount of each component.

**[Table 7-1]**

| | | | | Example 1 | Example 2 | Example 3 | Example 4 | Example 5 | Example 6 |
|---|---|---|---|---|---|---|---|---|---|
| Component (mass%) | Compound (A1) | | X-24-9011 | 1.46 | 1.29 | 1.46 | 1.46 | 1.46 | 1.29 |
| | Organosilicon compound (B) | | Tetraethyl orthosilicate | 0.36 | 0.32 | 0.36 | 0.36 | 0.36 | 0.32 |
| | Organosilicon compound (C) | | Decyltrimethoxysilane | 0.056 | 0.050 | 0.056 | 0.056 | 0.056 | 0.050 |
| | Water (D) | | | 0.037 | 0.032 | 0.037 | 0.037 | 0.037 | 0.032 |
| | Solvent (E) | Compound (E1) | Acetone | 93.0 | - | 29.9 | 10.0 | 25.0 | 75.3 |
| | | | Ethyl acetate | - | 93.8 | - | - | - | 18.4 |
| | | Organic solvent (E2) | Isopropyl alcohol | 4.9 | 4.4 | 4.9 | 4.9 | 23.0 | 4.4 |
| | | | Ethanol | - | - | 63.1 | 83.0 | 49.9 | - |
| | | | Butyl acetate | - | - | - | - | - | - |
| | | | Methyl ethyl ketone | - | - | - | - | - | - |
| | Catalyst (F) | | Hydrogen chloride | 0.0000133 | 0.0000118 | 0.0000133 | 0.0000133 | 0.0000129 | 0.0000118 |
| | | | (Amount in terms of 0.01 M hydrochloric acid) | 0.037 | 0.033 | 0.037 | 0.037 | 0.035 | 0.033 |
| | Weak acid (G) | | Malonic acid | 0.191 | 0.170 | 0.191 | 0.191 | 0.184 | 0.170 |
| Solid content concentration (mass%) | | | A1+B+C | 1.87 | 1.66 | 1.87 | 1.87 | 1.87 | 1.66 |
| Total solvent (E) (mass%) | | | | 97.9 | 98.1 | 97.9 | 97.9 | 97.9 | 98.1 |
| Total organic solvent (E2) (mass%) | | | | 4.9 | 4.4 | 68.0 | 87.9 | 72.9 | 4.4 |
| Proportion (mass%) of compound (E1) to solvent (E) | | | | 95.0 | 95.5 | 30.5 | 10.2 | 25.5 | 95.5 |
| Proportion (mass%) of organic solvent (E2) to solvent (E) | | | | 5.0 | 4.5 | 69.5 | 89.8 | 74.5 | 4.5 |
| Proportion (mass%) of isopropyl alcohol to solvent (E) | | | | 5.04 | 4.47 | 5.01 | 5.01 | 23.53 | 4.47 |
| Molar ratio | | | B/A1 | 4 | 4 | 4 | 4 | 4 | 4 |
| | | | B/C | 8 | 8 | 8 | 8 | 8 | 8 |
| | | | A1/C | 2 | 2 | 2 | 2 | 2 | 2 |
| Mass ratio | | | A1/B | 4.1 | 4.1 | 4.1 | 4.1 | 4.1 | 4.1 |
| | | | A1/C | 25.9 | 25.9 | 25.9 | 25.9 | 25.9 | 25.9 |
| | | | A1/(B+C) | 3.5 | 3.5 | 3.5 | 3.5 | 3.5 | 3.5 |
| | | | D/A1 | 0.025 | 0.025 | 0.025 | 0.025 | 0.025 | 0.025 |
| | | | D/(A1+B+C) | 0.020 | 0.020 | 0.020 | 0.020 | 0.020 | 0.020 |
| | | | E/A1 | 67 | 76 | 64 | 64 | 67 | 76 |
| | | | E/(A1+B+C) | 52 | 59 | 50 | 50 | 52 | 59 |
| | | | F/A1 | 0.0000092 | 0.0000092 | 0.0000092 | 0.0000092 | 0.0000088 | 0.0000092 |
| | | | F/(A1+S+C) | 0.0000071 | 0.0000071 | 0.0000071 | 0.0000071 | 0.0000069 | 0.0000071 |
| | | | G/A1 | 0.131 | 0.131 | 0.131 | 0.131 | 0.126 | 0.131 |
| | | | G/(A1+B+C) | 0.10 | 0.10 | 0.10 | 0.10 | 0.10 | 0.10 |

**[Table 7-2]**

| \| | | | | Example 7 | Example 8 | Example 9 | Example 10 | Example 11 | \| Example 12 |
|---|---|---|---|---|---|---|---|---|---|
| Component (mass%) | Compound (A1) | | X-24-9011 | 1.30 | 0.89 | 1.25 | 1.24 | 1.10 | 1.45 |
| | Organosilicon compound (B) | | Tetraethyl orthosilicate | 0.32 | 0.22 | 0.31 | 0.30 | 0.27 | 0.36 |
| | Organosilicon compound (C) | | Decyltrimethoxysilane | 0.050 | 0.034 | 0.048 | 0.048 | 0.043 | 0.056 |
| | Water (D) | | | 0.033 | 0.022 | 0.031 | 0.031 | 0.028 | 0.037 |
| | Solvent (E) | Compound (E1) | Acetone | - | - | - | - | - | 97.9 |
| | | | Tetrahydrofuran | 93.7 | - | - | - | - | - |
| | | | Dichloromethane | - | 95.7 | - | < | - | - |
| | | | Ethyl acetate | - | - | 94.0 | - | - | - |
| | | | Diacetone alcohol | - | - | - | 94.0 | - | - |
| | | | 1,3-Dioxolane | - | - | - | - | 94.7 | - |
| | | Organic solvent (E2) | Isopropyl alcohol | 4.4 | 3.0 | 4.2 | 4.2 | 3.7 | - |
| | | | Ethanol | - | - | - | - | - | - |
| | | | Butyl acetate | - | - | - | - | - | - |
| | | | Methyl ethyl ketone | - | - | - | - | - | - |
| | Catalyst (F) | | Hydrogen chloride | 0.0000119 | 0.0000082 | 0.0000114 | 0.0000114 | 0.0000101 | 0.0000133 |
| | | | (Amount in terms of 0.01 M hydrochloric add) | 0.033 | 0.022 | 0.031 | 0.031 | 0.028 | 0.037 |
| | Weak acid (G) | | Malonic acid | 0.171 | 0.117 | 0.164 | 0.163 | 0.145 | 0.191 |
| Solid content concentration (mass%) | | | A1+B+C | 1.67 | 1.14 | 1.60 | 1.59 | 1.42 | 1.87 |
| Total solvent (E) (mass%) | | | | 98.1 | 98.7 | 98.2 | 98.2 | 98.4 | 97.9 |
| Total organic solvent (E2) (mass%) | | | | 4.4 | 3.0 | 4.2 | 4.2 | 3.7 | 0 |
| Proportion (mass%) of compound (E1) to solvent (E) | | | | 95.5 | 96.9 | 95.7 | 95.7 | 96.2 | 100 |
| Proportion (mass%) of organic solvent (E2) to solvent (E) | | | | 4.5 | 3.1 | 4.3 | 4.3 | 3.8 | 0 |
| Proportion (mass%) of isopropyl alcohol to solvent (E) | | | | 4.5 | 3.1 | 4.3 | 4.3 | 3.8 | 0 |
| Molar ratio | | | B/A1 | 4 | 4 | 4 | 4 | 4 | 4 |
| | | | B/C | 8 | 8 | 8 | 8 | 8 | 8 |
| | | | A1/C | 2 | 2 | 2 | 2 | 2 | 2 |
| Mass ratio | | | A1/B | 4.1 | 4.1 | 4.1 | 4.1 | 4.1 | 4.1 |
| | | | A1/C | 25.9 | 25.9 | 25.9 | 25.9 | 25.9 | 25.9 |
| | | | A1 /(B+C) | 3.5 | 3.5 | 3.5 | 3.5 | 3.5 | 3.5 |
| | | | D/A1 | 0.025 | 0.025 | 0.025 | 0.025 | 0.025 | 0.025 |
| | | | D/(A1+B+C) | 0.020 | 0.020 | 0.020 | 0.020 | 0.020 | 0.020 |
| | | | E/A1 | 75 | 111 | 79 | 79 | 89 | 67 |
| | | | E/(A1+B+C) | 59 | 86 | 61 | 62 | 69 | 52 |
| | | | F/A1 | 0.0000092 | 0.0000092 | 0.0000092 | 0.0000092 | 0.0000092 | 0.0000092 |
| | | | F/(A1+B+C) | 0.0000071 | 0.0000071 | 0.0000071 | 0.0000071 | 0.0000071 | 0.0000071 |
| | | | G/Al | 0.131 | 0.131 | 0.131 | 0.131 | 0.131 | 0.131 |
| | | | G/(A1+B+C) | 0.10 | 0.10 | 0.10 | 0.10 | 0.10 | 0.10 |

**[Table 7-3]**

| | | | | Comparative Example 1 | Comparative Example 2 | Comparative Example 3 |
|---|---|---|---|---|---|---|
| Component (mass%) | Compound (A1) | | X-24-9011 | 1.46 | 1.32 | 1.42 |
| | Organosilicon compound (B) | | Tetraethyl orthosilicate | 0.36 | 0.32 | 0.35 |
| | Organosilicon compound (C) | | Decyltrimethoxysilane | 0.056 | 0.051 | 0.055 |
| | Water (D) | | | 0.037 | 0.033 | 0.036 |
| | Solvent (E) | Compound (E1) | Acetone | - | - | - |
| | | | Ethyl acetate | - | - | - |
| | | Organic solvent (E2) | Isopropyl alcohol | 4.9 | 4.5 | 4.8 |
| | | | Ethanol | 93.0 | - | - |
| | | | Butyl acetate | - | 93.6 | - |
| | | | Methyl ethyl ketone | - | - | 93.1 |
| | Catalyst (F) | | Hydrogen chloride | 0.0000133 | 0.0000121 | 0.0000130 |
| | | | (Amount in terms of 0.01 M hydrochloric acid) | 0.037 | 0.033 | 0.036 |
| | Weak acid (G) | | Malonic acid | 0.191 | 0.173 | 0.187 |
| Solid content concentration (mass%) | | | A1+B+C | 1.87 | 1.69 | 1.83 |
| Total solvent (E) (mass%) | | | | 97.9 | 98.1 | 98.0 |
| Total organic solvent (E2) (mass%) | | | | 97.9 | 98.1 | 98.0 |
| Proportion (mass%) of compound (E1) to solvent (E) | | | | - | - | - |
| Proportion (mass%) of organic solvent (E2) to solvent (E) | | | | 100 | 100 | 100 |
| Proportion (mass%) of isopropyl alcohol to solvent (E) | | | | 5.04 | 4.55 | 4.93 |
| Molar ratio | | | B/A1 | 4 | 4 | 4 |
| | | | B/C | 8 | 8 | 8 |
| | | | A1/C | 2 | 2 | 2 |
| Mass ratio | | | A1/B | 4.1 | 4.1 | 4.1 |
| | | | A1/C | 25.9 | 25.9 | 25.9 |
| | | | A1/(B+C) | 3.5 | 3.5 | 3.5 |
| | | | D/A1 | 0.025 | 0.025 | 0.025 |
| | | | D/(A1+B+C) | 0.020 | 0.020 | 0.020 |
| | | | E/A1 | 67 | 75 | 69 |
| | | | E/(A1+B+C) | 52 | 58 | 54 |
| | | | F/A1 | 0.0000092 | 0.0000092 | 0.0000092 |
| | | | F/(A1+B+C) | 0.0000071 | 0.0000071 | 0.0000071 |
| | | | G/Al | 0.131 | 0.131 | 0.131 |
| | | | G/(A1+B+C) | 0.10 | 0.10 | 0.10 |

The Hansen solubility parameter (HSP) of each of acetone, ethyl acetone, isopropyl alcohol, tetrahydrofuran, dichloromethane, methyl acetate, and methyl ethyl ketone used in preparation of the coating solutions, registered in the database of HSPiP version 5, is shown in Table 8 below. The values of the dispersion term (δD), the polar term (δP), and the hydrogen bonding term (δH) of the Hansen solubility parameter are also shown in Table 8 below. The calculated value of the ratio (δP/δH) of the polar term (δP) to the hydrogen bonding term (δH) is also shown in Table 8 below.

**[Table 8]**

| | δD | δP | δH | HSP | δP/ δH |
|---|---|---|---|---|---|
| Acetone | 15.5 | 10.4 | 7.0 | 19.9 | 1.49 |
| Ethyl acetate | 15.8 | 5.3 | 7.2 | 18.2 | 0.74 |
| Isopropyl alcohol | 15.8 | 6.1 | 16.4 | 23.6 | 0.37 |
| Tetrahydrofuran | 16.8 | 5.7 | 8.0 | 19.5 | 0.71 |
| Dichloromethane | 17 | 7.3 | 7.1 | 19.8 | 1.03 |
| Methyl acetate | 15.5 | 7.2 | 7.6 | 18.7 | 0.95 |
| Diacetone alcohol | 15.8 | 8.2 | 10.8 | 20.8 | 0.76 |
| 1,3-Dioxolane | 18.1 | 6.6 | 9.3 | 21.4 | 0.71 |
| Ethanol | 15.8 | 8.8 | 19.4 | 26.5 | 0.45 |
| Butyl acetate | 15.8 | 3.7 | 6.3 | 17.4 | 0.59 |
| Methyl ethyl ketone | 16.0 | 9.0 | 5.1 | 19.1 | 1.76 |

The volume fraction was determined by multiplying the density with the mass ratio of the compound (E1) and the organic solvent (E2) mixed in each of the solvents (E) in Examples 1 to 12 and Comparative Examples 1 to 3, and the Hansen solubility parameter (HSP) of such each solvent (E) was calculated based on the volume fraction determined and the Hansen solubility parameters (HSP) of the compound (E1) and the organic solvent (E2) registered in the database of HSPiP version 5, according to the above-described expression. The results of calculation are shown in Table 9 below. The hydrogen bonding term (δH) of the Hansen solubility parameter calculated of such each solvent (E) was calculated according to the above-described expression. The hydrogen bonding term is also shown in Table 9. The dispersion term (δD) and the polar term (δP) of the Hansen solubility parameter calculated of such each solvent (E) were also similarly calculated. These are also shown in Table 9 below. The ratio (δP/δH) of the polar term (δP) to the hydrogen bonding term (δH) was calculated. The ratio is also shown in Table 9 below.

**[Table 9]**

| | Solvent (E) | | | | |
|---|---|---|---|---|---|
| | δD | δP | δH | HSP | δP/ δH |
| Example 1 | 15.5 | 10.2 | 7.5 | 20.0 | 1.36 |
| Example 2 | 15.8 | 5.3 | 7.7 | 18.4 | 0.69 |
| Example 3 | 15.7 | 9.2 | 15.5 | 23.9 | 0.59 |
| Example 4 | 15.8 | 8.8 | 18 | 25.5 | 0.49 |
| Example 5 | 15.7 | 8.6 | 15.5 | 23.7 | 0.55 |
| Example 6 | 15.6 | 9.3 | 7.5 | 19.6 | 1.24 |
| Example 7 | 16.7 | 5.7 | 8.4 | 19.6 | 0.68 |
| Example 8 | 16.9 | 7.2 | 7.6 | 19.9 | 0.96 |
| Example 9 | 15.5 | 7.1 | 8.0 | 18.9 | 0.89 |
| Example 10 | 15.8 | 8.1 | 11.1 | 20.9 | 0.73 |
| Example 11 | 18.0 | 6.6 | 9.7 | 21.4 | 0.68 |
| Example 12 | 15.5 | 10.4 | 7.0 | 19.9 | 1.49 |
| Comparative Example 1 | 15.8 | 8.7 | 19.2 | 26.3 | 0.45 |
| Comparative Example 2 | 15.8 | 3.8 | 6.8 | 17.6 | 0.56 |
| Comparative Example 3 | 16.0 | 8.9 | 5.7 | 19.2 | 1.56 |

Next, the obtained coating solutions 1 to 15 were each applied onto a glass substrate of 10 cm × 40 cm (soda lime glass, top surface) with a surface activated by atmospheric pressure plasma treatment, by hand-coating using a nonwoven fabric. The amount of the coating solution applied was 0.5 ml. After the coating, an excess solution was wiped off with a cotton towel. After the coating, the applied coating solution was left to stand at normal temperature and normal humidity for 90 minutes to perform curing, thereby forming a film on the glass substrate. For the film on the glass substrate, which had been obtained with a curing time set to 90 minutes, the contact angle and the slip drop angle were measured by the following method.

### [Measurement of contact angle]

Using DM 700 manufactured by Kyowa Interface Science Co., Ltd. as a contact angle measuring apparatus, the contact angle of water with respect to a surface of the film was measured by a liquid droplet method. The analysis method in the liquid droplet method was a 0/2 method, and the amount of water droplet was 3.0 µL.

### [Measurement of slip drop angle]

Using DM 700 manufactured by Kyowa Interface Science Co., Ltd. as a contact angle measuring apparatus, the slip drop angle of water with respect to a surface of the film was measured by a slip drop method, and the dynamic water-repellent property of the surface of the film was evaluated. The analysis method in the slip drop method was a tangent method, and the amount of water droplet was 10 µL. The method for setting slope was intermittent sloping, and slip drop detection was performed after slip drop. Determination of movement was based on an angle of advancement, the slip drop determination time was 10000 ms, and the slip drop determination distance was 5 dot. The "dot" means a pixel at a definition at the time of taking a picture with a camera attached to DM 700.

The contact angle and the slip drop angle were measured after a lapse of 24 hours from formation of a film on the glass substrate for a curing time set to 90 minutes. The results (initial values) of the measurements of the contact angle and the slip drop angle are shown in Table 10 below.

Next, each of the obtained coating solutions 1 to 15 was held at 50°C for 15 days, 30 days, or 45 days, a film was then formed on a glass substrate by the above-described method, and the obtained film on the glass substrate was subjected to measurements of the contact angle and the slip drop angle of water with respect to a surface of the film in the same manner as in the above-described method. The results of the measurements of the contact angle and the slip drop angle after the holding are also shown in Table 10 below.

**[Table 10]**

| | Contact angle (°) | | | | Slip drop angle (°) | | | |
|---|---|---|---|---|---|---|---|---|
| | Initial | **15 days** | **30 days** | **45 days** | Initial | **15 days** | **30 days** | **45 days** |
| **Example 1** | 105.9 | 104.9 | 105.0 | 105.1 | 8.3 | 6.7 | 7.3 | 6.0 |
| **Example 2** | 104.3 | 104.2 | 104.2 | 103.9 | 8.3 | 7.3 | 8.7 | 7.7 |
| **Example 3** | 105.5 | 104.9 | 104.1 | 104.8 | 6.7 | 8.7 | 8.0 | 6.7 |
| **Example 4** | 105.3 | 105.5 | 104.4 | 103.3 | 6.7 | 7.7 | 8.7 | 11.0 |
| **Example 5** | 105.3 | 104.1 | 105.0 | 104.7 | 7.0 | 7.7 | 8.3 | 7.0 |
| **Example 6** | 106.0 | 104.1 | 103.9 | 104.2 | 8.7 | 8.3 | 9.3 | 7.7 |
| **Example 7** | 105.9 | 105.3 | 104.9 | 104.4 | 6.3 | 6.3 | 6.0 | 6.3 |
| **Example 8** | 104.8 | 103.7 | 103.8 | 103.3 | 8.0 | 10.0 | 18.3 | 19.7 |
| **Example 9** | 104.8 | 104.5 | 103.8 | 103.8 | 9.3 | 8.7 | 11.0 | 12.3 |
| **Example 10** | 104.3 | 105.7 | 104.6 | 104.2 | 8.3 | 11.3 | 13.0 | 18.0 |
| **Example 11** | 105.1 | 104.2 | 104.1 | 104.0 | 9.0 | 8.0 | 7.3 | 7.7 |
| **Example 12** | 104.4 | 104.3 | 105.7 | 105.8 | 7.7 | 9.7 | 8.0 | 8.7 |
| **Comparative Example 1** | 106.3 | 101.2 | 98.2 | - | 8.3 | 18.3 | 38.0 | - |
| **Comparative Example 2** | 103.2 | 102.1 | - | - | 10.0 | 32.0 | - | - |
| **Comparative Example 3** | 106.6 | 102.4 | - | - | 10.7 | 34.0 | - | - |

Next, for the film on the glass substrate, which had been obtained with a curing time set to 90 minutes, a spraying test was conducted by the following method, and the slip drop property (water-repellent property) in adhesion of the water droplet on the film was evaluated.

### [Spraying test]

The glass substrate on which the film was formed was propped at an angle of elevation of 85° at normal temperature and normal humidity, and water was sprayed once with a spray gun at a position 10 cm off a surface of the film formed on the glass substrate, toward the surface of the film. The spray gun used was AS ONE SPRAYER "4-5002-01" (capacity: 500 ml), and spraying of water was conducted with the spray gun being moved in a lateral direction. The nozzle of the spray gun was in the form of mist spraying, and the amount of water per spraying was about 0.6 ml and the movement distance in the lateral direction was 40 cm.

After spraying of water, the behavior of the water droplet adhering to the film was observed for up to a minute. When the water droplet dropped or at least moved slowly within a minute, it was determined that "the water droplet slipped and dropped", and the number of times of spraying at this point of time was measured. On the other hand, when the water droplet did not move even though a minute had passed after spraying of water, water was sprayed again in the same manner, and the number of times of spraying until it was determined that "the water droplet slipped and dropped" was measured. When the water droplet did not slip and drop and stopped on the way, it was not determined that "the water droplet slipped and dropped", water was sprayed again in the same manner, and such an operation was repeated until drop of the water droplet. The number of tests was 3. In each test, the number of times of spraying in drop of the water droplet was measured. The average values determined are shown in Table 9 below. When the number of times of spraying until slip drop of the water droplet was small, the film was evaluated as having good slip drop property because a very small water droplet slipped and dropped from a surface of the film. On the basis of the results of the measurements in the spraying test, the slip drop property of the film was evaluated in accordance with the following criteria.

### [Evaluation criteria for slip drop property]

The average of the numbers of times of spraying in the three tests is less than 2.0 times: particularly excellent slip drop property (indicated by ⊙ in Table below.)

The average of the numbers of times of spraying in the three tests is 2.0 or more and less than 3.0: more excellent slip drop property (indicated by ○ in Table below.).

The average of the numbers of times of spraying in the three tests is 3.0 or more and less than 4.0: excellent slip drop property (indicated by △ in Table below.)

The average of the numbers of times of spraying in the three tests is 4.0 or more: poor slip drop property (indicated by × in Table below.)

In each test, the water droplet dropped and the number of times of spraying was measured, followed by repeating spraying of water, so that water was sprayed to the film ten times. After the spraying ten times, the water droplet adhering to a surface of the film was removed using an airgun, and the next test was subsequently conducted. That is, by repeating the test three times, the durability of the film was also evaluated.

Table 11 below shows the results of evaluations of the number of times of spraying (initial value) and the slip drop property in the spraying test.

Next, the storage stability of the obtained coating solutions was evaluated. For the storage stability, each of the obtained coating solutions 1 to 15 was held at 50°C for 15 days, 30 days, or 45 days, a film was then formed on a glass substrate by the above-described method, the obtained film on the glass substrate was subjected to a spraying test by the above-described method, and the slip drop property of the film was evaluated. Table 11 below shows the results of evaluations of the number of times of spraying and the slip drop property in the spraying test after the holding.

**[Table 11]**

| | | Initial | 15 days | 30 days | 45 days |
|---|---|---|---|---|---|
| Example 1 | Spraying test (number of times) | 1.3 | 1.3 | 1.0 | 1.3 |
| | Slip drop property | ⊚ | ⊚ | ⊚ | ⊚ |
| Example 2 | Spraying test (number of times) | 1.0 | 1.0 | 1.0 | 1.0 |
| | Slip drop property | ⊚ | ⊚ | ⊚ | ⊚ |
| Example 3 | Spraying test (number of times) | 1.3 | 1.7 | 1.3 | 1.3 |
| | Slip drop property | ⊚ | ⊚ | ⊚ | ⊚ |
| Example 4 | Spraying test (number of times) | 1.3 | 1.7 | 1.7 | 2.3 |
| | Slip drop property | ⊚ | ⊚ | ⊚ | ○ |
| Example 5 | Spraying test (number of times) | 1.3 | 1.3 | 1.7 | 1.7 |
| | Slip drop property | ⊚ | ⊚ | ⊚ | ⊚ |
| Example 6 | Spraying test (number of times) | 1.3 | 1.7 | 1.7 | 1.7 |
| | Slip drop property | ⊚ | ⊚ | ⊚ | ⊚ |
| Example 7 | Spraying test (number of times) | 1.3 | 1.0 | 1.0 | 1.0 |
| | Slip drop property | ⊚ | ⊚ | ⊚ | ⊚ |
| Example 8 | Spraying test (number of times) | 1.0 | 2.3 | 3.3 | 3.0 |
| | Slip drop property | ⊚ | ○ | Δ | Δ |
| Example 9 | Spraying test (number of times) | 1.0 | 1.7 | 2.0 | 2.0 |
| | Slip drop property | ⊚ | ⊚ | ○ | ○ |
| Example 10 | Spraying test (number of times) | 1.3 | 2.3 | 2.7 | 3.0 |
| | Slip drop property | ⊚ | ○ | ○ | △ |
| Example 11 | Spraying test (number of times) | 1.7 | 1.0 | 1.7 | 1.7 |
| | Slip drop property | ⊚ | ⊚ | ⊚ | ⊚ |
| Example 12 | Spraying test (number of times) | 1.0 | 1.3 | 1.7 | 1.7 |
| | Slip drop property | ⊚ | ⊚ | ⊚ | ⊚ |
| Comparative Example 1 | Spraying test (number of times) | 1.0 | 3.7 | 7.0 | - |
| | Slip drop property | ⊚ | Δ | × | - |
| Comparative Example 2 | Spraying test (number of times) | 1.7 | 4.3 | - | - |
| | Slip drop property | ⊚ | × | - | - |
| Comparative Example 3 | Spraying test (number of times) | 1.8 | 5.0 | - | - |
| | Slip drop property | ⊚ | × | - | - |

The following can be revealed from Table 10 and Table 11. In the films obtained using the coating solutions 1 to 12 being mixed compositions satisfying the requirements specified in the present invention, the average of the numbers of times of spraying until slip drop of the water droplet was as small as less than 4.0, and thus the films were shown to be excellent in slip drop property where even a very small water droplet slipped and dropped. The films formed after holding the coating solutions 1 to 12 at 50°C for predetermined days were also excellent in slip drop property, and the coating solutions 1 to 12 were shown to be excellent in storage stability. On the other hand, the coating solutions 13 to 15 being mixed compositions not satisfying the requirements specified in the present invention were not able to be sufficiently improved in storage stability.

## Claims

1. A mixed composition of
a compound (A1) represented by the following formula (a1);
an organosilicon compound (B) represented by the following formula (b1); and
a solvent (E),
wherein the solvent (E) comprises a compound (E1) satisfying a Hansen solubility parameter of 18 (J/cm³)^{1/2} or more and 23.5 (J/cm³)^{1/2} or less and a hydrogen bonding term (δH) of the Hansen solubility parameter, of 5.5 (J/cm³)^{1/2} or more: 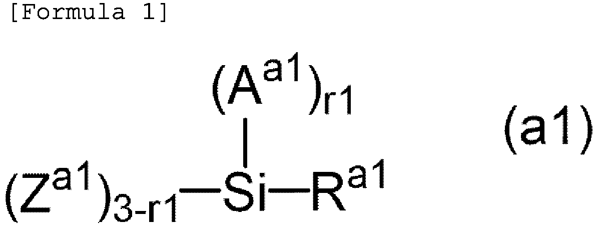
wherein A^{a1} represents a hydroxy group or a hydrolyzable group, and a plurality of A^{a1}s, when present, are optionally different from each other;
z^{a1} represents a hydrocarbon group, a trialkylsilyl group-containing molecular chain, or a siloxane backbone-containing group, and a plurality of z^{a1}s, when present, are optionally different from each other;
r1 represents an integer of 1 to 3; and
R^{a1} represents a group represented by the following formula (a11); 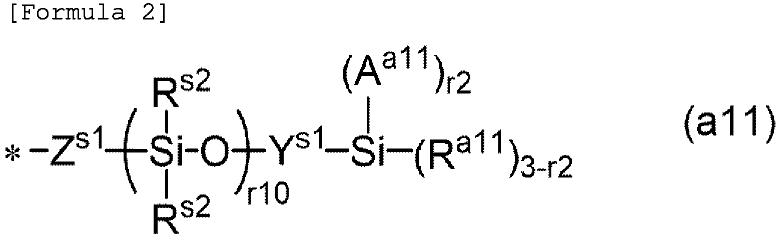
wherein R^{s2}s each independently represent an alkyl group having 1 to 4 carbon atoms;
R^{a11} represents a hydrocarbon group or a trialkylsilyloxy group, hydrogen atoms in the hydrocarbon group or the trialkylsilyloxy group are optionally replaced by fluorine atoms, and a plurality of R^{a11}s, when present, are optionally different from each other;
A^{a11} represents a hydroxy group or a hydrolyzable group, and a plurality of A^{a11}s, when present, are optionally different from each other;
Z^{s1} represents -O- or a divalent hydrocarbon group, and -CH₂- in the divalent hydrocarbon group is optionally replaced by -O-;
Y^{s1} represents a single bond or -Si (R^{s2})₂-L^{s1}-, L^{s1} represents a divalent hydrocarbon group, and -CH₂- in the divalent hydrocarbon group is optionally replaced by -O-;
r2 represents an integer of 0 to 3;
r10 represents an integer of 1 or more; and
* represents a bond;
Si (R^{b1})_{b20}(X^{b1})_{4-b20} (b1)
wherein R^{b1} represents a hydrocarbon group having 1 to 5 carbon atoms;
X^{b1} represents a hydrolyzable group; and
b20 is 0 or 1.

2. The mixed composition according to claim 1, wherein the molar ratio [organosilicon compound (B)/compound (A1)] of the organosilicon compound (B) to the compound (A1) is less than 10.

3. The mixed composition according to claim 1 or 2, wherein an organosilicon compound (C) represented by the following formula (c1) is mixed:
R^{c1}-Si(X^{c1})₃ (c1)
wherein R^{c1} represents a hydrocarbon group having 6 to 30 carbon atoms; and
X^{c1} represents a hydrolyzable group.

4. The mixed composition according to claim 3, wherein the mass ratio [compound (A1)/(organosilicon compound (B) + organosilicon compound (C))] of the compound (A1) to the total amount of the organosilicon compound (B) and the organosilicon compound (C) is 0.060 or more.

5. The mixed composition according to claim 3 or 4, wherein the mass ratio [compound (A1)/organosilicon compound (C)] of the compound (A1) to the organosilicon compound (C) is 0.2 or more and 30 or less.

6. The mixed composition according to any one of claims 1 to 5, wherein the compound (E1) satisfies a ratio (δP/δH) of the polar term (δP) to the hydrogen bonding term (δH) of the Hansen solubility parameter, of 0.70 or more and 1.70 or less.

7. The mixed composition according to any one of claims 1 to 6, wherein the solvent (E) comprises 5 mass% or more and 100 mass% or less of the compound (E1).

8. The mixed composition according to any one of claims 1 to 7, wherein the solvent (E) satisfies a ratio (δP/δH) of the polar term (δP) to the hydrogen bonding term (δH) of the Hansen solubility parameter, of 0.57 or more and 1.55 or less.

9. The mixed composition according to any one of claims 1 to 8, wherein the compound (A1) is a compound represented by the following formula (a1-1): 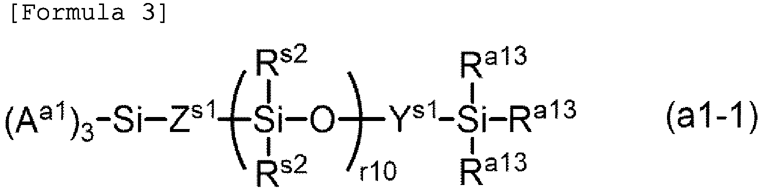
wherein A^{a1}, Z^{s1}, R^{s2}, Y^{s1}, and r10 have the same meanings as described above; and
R^{a13}s each independently represent a hydrocarbon group or a trialkylsilyloxy group, and hydrogen atoms in the hydrocarbon group or the trialkylsilyloxy group are optionally replaced by fluorine atoms.

10. The mixed composition according to claim 9, wherein R^{a13}s each independently represent an alkyl group having 1 to 4 carbon atoms.

11. The mixed composition according to any one of claims 1 to 10, wherein water (D) is mixed, and when the total amount of the mixed composition is 100 mass%, the amount of the water (D) is less than 20 mass%.

12. The mixed composition according to any one of claims 1 to 11, wherein a weak acid (G) having a pKa of 1 or more and 5 or less is mixed.

13. A film obtained by curing the mixed composition according to any one of claims 1 to 12.

14. Glass having the film according to claim 13 on at least one surface thereof.
